# EUROPEAN PATENT SPECIFICATION

(11) **EP 4 080 913 B1**
(45) Date of publication and mention of the grant of the patent: **17.07.2024**
(21) Application number: 20901462.0
(22) Date of filing: 20.11.2020
(51) Int. Cl.: H04W 4/40, H04W 72/02, H04W 24/02, H04W 24/08, H04W 92/10, H04W 92/18, H04W 76/20

(54) **COMMUNICATION METHOD AND APPARATUS**
KOMMUNIKATIONSVERFAHREN UND -VORRICHTUNG
PROCÉDÉ ET APPAREIL DE COMMUNICATION

(30) Priority: 19.12.2019 CN 201911321096
(43) Date of publication of application: 26.10.2022
(73) Proprietor: Honor Device Co., Ltd., Shenzhen, Guangdong 518040 (CN)
(72) Inventor: WANG, Hongyue, Shenzhen, Guangdong 518040 (CN); LIU, Gang, Shenzhen, Guangdong 518040 (CN); ZHU, Dawei, Shenzhen, Guangdong 518040 (CN); HU, Jiewen, Shenzhen, Guangdong 518040 (CN); WU, Yang, Shenzhen, Guangdong 518040 (CN); CHEN, Tenghao, Shenzhen, Guangdong 518040 (CN)
(74) Representative: Maiwald GmbH
(86) International application number: PCT/CN2020/130677
(87) International publication number: WO 2021/120985

(56) References cited:
- WO-A1-2018/233674
- WO-A1-2019/096705
- CN-A- 106 559 443
- CN-A- 109 068 297
- CATT ET AL: "Solution for path switch between PC5 and Uu", vol. SA WG2, no. Reno, USA; 20191118 - 20191122, 20 November 2019 (2019-11-20), XP051827103, Retrieved from the Internet <URL:https://ftp.3gpp.org/Meetings_3GPP_SYNC/SA2/Docs/S2-1912400.zip S2-1912400_merge of 11444 and part of 11667_r2.docx> [retrieved on 20191120]
- KOUSARIDAS APOSTOLOS ET AL: "Multi-Connectivity Management for 5G V2X Communication", 2019 IEEE 30TH ANNUAL INTERNATIONAL SYMPOSIUM ON PERSONAL, INDOOR AND MOBILE RADIO COMMUNICATIONS (PIMRC), IEEE, 8 September 2019 (2019-09-08), pages 1 - 7, XP033663034, DOI: 10.1109/PIMRC.2019.8904431
- NOKIA , ALCATEL-LUCENT SHANGHAI BELL: "Path Switch analysis for FeD2D", 3GPP DRAFT; R3-171218 FED2D PATH SWITCH, vol. RAN WG3, 25 March 2017 (2017-03-25), Spokane, Washington, USA, pages 1 - 3, XP051255573

## Description

This application claims priority to Chinese Patent Application No. 201911321096.0, filed with the China National Intellectual Property Administration on December 19, 2019 and entitled "COMMUNICATION METHOD AND APPARATUS".

### TECHNICAL FIELD

This application relates to the field of communication technologies, and in particular, to a communication method and apparatus.

### BACKGROUND

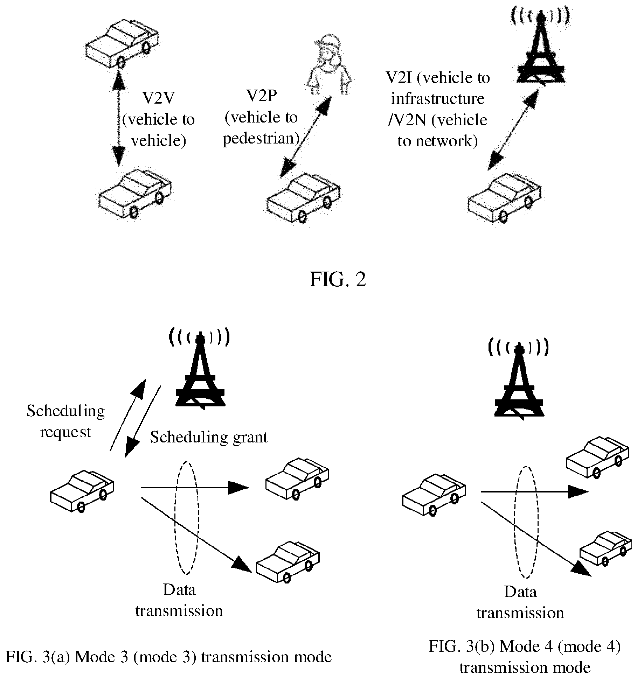

The Internet of Vehicles refers to that an in-vehicle device on a vehicle effectively uses dynamic information of all vehicles on an information network platform by using a wireless communication technology, to provide different function services during vehicle operation. Currently, the Internet of Vehicles is divided into two camps: One is dedicated short range communication (dedicated short range communication, DSRC) (that is, 802.11p) originating in the 1990s, and the other is cellular vehicle-to-everything (cellular vehicle-to-everything, C-V2X). V2X communication refers to communication between a vehicle and anything outside. As shown in FIG. 2, V2X includes vehicle-to-vehicle communication (vehicle to vehicle, V2V), vehicle-to-pedestrian communication (vehicle to pedestrian, V2P), vehicle-to-infrastructure communication (vehicle to infrastructure, V2I), and vehicle-to-network communication (vehicle to network, V2N). The C-V2X has advantages such as high reliability, low delay, and low costs compared with 802.IIP. Currently, standardization of R14 and R15 for LTE V2X has been completed, and NR V2X is in the process of standardization.

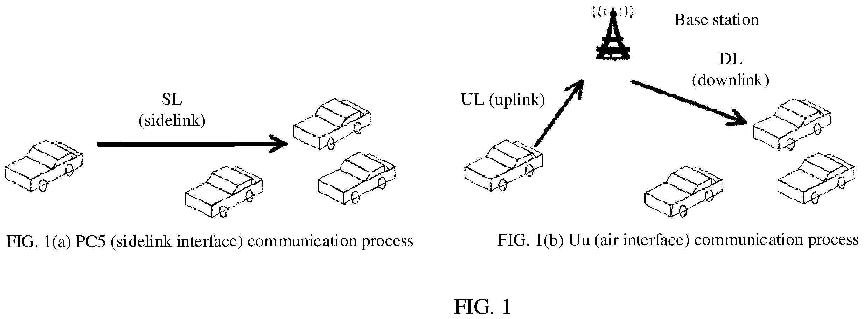

Work scenarios that can be supported by the C-V2X includes both a scenario in which a cellular network is covered and a scenario in which a cellular network is not deployed. In a specific technology, the C-V2X may provide two types of communication interfaces: a PC5 interface (a direct communication interface between terminal devices) and a Uu interface (a cellular communication interface between a terminal device and a base station). As shown in FIG. 1(b), when a terminal device that supports the C-V2X is in cellular coverage, a Uu interface may be controlled by using a cellular network to communicate with a base station through an uplink (uplink, UL) or a downlink (downlink, DL). As shown in FIG. 1(a), regardless of whether network coverage is available, the terminal device may communicate with another terminal device through a sidelink (sidelink, SL) by using a PC5 interface. The Uu interface and the PC5 interface are combined to support each other, and are used for V2X service transmission together. Therefore, effective redundancy can be provided to ensure communication reliability.

In some scenarios, switching between the PC5 interface and the Uu interface needs to be performed. For example, when a terminal drives from a cellular coverage scene to a non-coverage area, a Uu interface of the terminal cannot be used. In this case, the terminal needs to switch from the Uu interface to the PC5 interface for communication. For another example, when an interface cannot be normally used for communication in a situation (for example, a channel usage changes or channel quality is poor), the terminal also needs to switch to another interface for communication. However, when the switching occurs, it is urgent to provide a technical solution for ensuring that a communication service is not interrupted.
CATT ET AL: "Solution for path switch between PCS and Uu", 3GPP DRAFT; 32-1912400, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Reno, USA; 20191118 - 20191122 20 November 2019, retrieved from the Internet: URL: https://ftp.39pp.org/Meetings_3G PP_SYNC/SA2/Docs/S2-1912400.2ip S2-1912400_merge of 11444 and part of 11667_r2.docx, discusses supporting direct communication path switching from 5GC Uu path to PC5 path or vice versa.
KOUSARIDAS APOSTOLOS ET AL: "Multi-Connectivity Management for 5G V2X Communication", 2019 IEEE 30TH ANNUAL INTERNATIONAL SYMPOSIUM ON PERSONAL, INDOOR AND MOBILE RADIO COMMUNICATIONS (PIMRC), IEEE, 8 September 2019 (2019-09-08), pages 1-7, discusses communication interface switching in V2X.

### SUMMARY

This application provides a communication method and apparatus, so as to reduce a probability of service interruption in an interface switching process.

The invention is set out in the appended independent claims, wherein further embodiments are set out in the appended dependent claims. To achieve the objective, the following technical solutions are used in this application:

According to a first aspect, this application provides a communication method. The method may be performed by a first terminal apparatus or another apparatus having a function of the first terminal apparatus. The another apparatus may be used with the first terminal apparatus. For example, the another apparatus may be a chip system in the first terminal apparatus. The method includes: continuously communicating in a first mode of a PC5 interface or over a Uu interface; determining to perform interface switching or mode switching; configuring an interface or mode to be switched to; and after the configuration is completed, switching from the first mode of the PC5 interface to the Uu interface for communication, or switching from the first mode of the PC5 interface to a second mode of the PC5 interface for communication, or switching from the Uu interface to the first mode of the PC5 interface for communication, or switching from the Uu interface to the second mode of the PC5 interface for communication.

That is, the first terminal apparatus performs interface or mode switching only after the interface or mode to be switched to is configured. In this way, it can be ensured that during the configuration, the terminal apparatus can continue to communicate by using the original interface, and after the configuration is completed, the terminal apparatus can switch to the newly switched-to interface or mode for communication. This ensures that a switching delay meets a service delay requirement, thereby ensuring service continuity of the terminal apparatus, and implementing seamless switching between new and old interfaces or between new and old modes.

The determining to perform interface switching includes:
when unicast communication is performed and a Uu interface is available, if a resource usage of a PC5 interface is higher than a first threshold, and/or link quality of the PC5 interface is lower than link quality of the Uu interface, and/or scenario information is applicable to communication over the Uu interface, determining to switch from the PC5 interface to the Uu interface;
when unicast communication is performed and a Uu interface is available, if the resource usage of the PC5 interface is lower than the first threshold, and/or the link quality of the PC5 interface is higher than the link quality of the Uu interface, and/or the scenario information is applicable to communication over the PC5 interface, determining to switch from the Uu interface to a first mode or a second mode of the PC5 interface;
when unicast communication is performed and a Uu interface is available, if the resource usage for the first mode is lower than a fifth threshold, and/or the link quality of the Uu interface is lower than a sixth threshold, and/or the scenario information is applicable to communication in the first mode, determining to switch from the Uu interface to the first mode of the PC5 interface;
when unicast communication is performed and a Uu interface is available, if the resource usage for the second mode is lower than a seventh threshold, and/or the link quality of the Uu interface is lower than the sixth threshold, and/or the scenario information is applicable to communication in the second mode, determining to switch from the Uu interface to the second mode of the PC5 interface; or
when broadcast communication is performed and a Uu interface is available, if the resource usage of the PC5 interface is higher than the first threshold, determining to switch from the PC5 interface to the Uu interface; and/or if the scenario information is applicable to communication over the Uu interface, determining to switch from the PC5 interface to the Uu interface; or
when broadcast communication is performed and a terminal apparatus cannot receive downlink information of a network apparatus, determining to switch from the Uu interface to the first mode or the second mode of the PC5 interface; and/or if the resource usage for the second mode is lower than the seventh threshold, and/or the scenario information is applicable to communication in the second mode, determining to switch from the Uu interface to the second mode of the PC5 interface; and/or if the resource usage for the first mode is lower than the fifth threshold, and/or the scenario information is applicable to communication in the first mode, determining to switch from the Uu interface to the first mode of the PC5 interface.

In a possible design, the determining to perform mode switching includes:
when a resource pool for a first mode and a resource pool for a second mode are mutually independent, a resource usage for the first mode is higher than a first threshold, and a resource usage for the second mode is lower than the first threshold, determining to switch from the first mode to the second mode; or if the resource usage for the first mode is higher than the resource usage for the second mode, determining to switch from the first mode to the second mode; or
when the resource pool for the first mode and the resource pool for the second mode are shared, and a service transmission delay is lower than a third threshold, determining to switch from the second mode to the first mode; or if a terminal apparatus density is higher than a fourth threshold, determining to switch from the first mode to the second mode; where
the first mode is mode 4, and the second mode is mode 3.

In this application, considering switching between mode 3 and mode 4, a probability of a resource collision can be reduced in some scenarios, and network resource utilization can be improved. In addition, a probability of service success can be improved, and safety performance of the Internet of Vehicles and quality of user experience in driving service can be improved.

In a possible design, configuring a Uu interface to be switched to includes:
sending a first configuration request to a network apparatus by using the Uu interface, where the first configuration request is used to request first configuration information for the Uu interface; and
receiving the first configuration information from the network apparatus by using the Uu interface.

In a possible design, the first mode is mode 4; and
configuring mode 3 to be switched to includes:
sending a second configuration request to the network apparatus by using the Uu interface, where the second configuration request is used to request second configuration information for mode 3 of the PC5 interface; and
receiving the second configuration information from the network apparatus by using the Uu interface.

In a possible design, the first mode is mode 3; and
configuring mode 4 to be switched to includes:
obtaining resource pool information for mode 4; and
reserving a resource for mode 4 based on the resource pool information.

In a possible design, obtaining link quality of a Uu interface includes:
sending a first parameter obtaining request to a network apparatus, so as to request the network apparatus to send a first reference signal by using the Uu interface;
receiving the first reference signal from the network apparatus by using the Uu interface; and
measuring the link quality of the Uu interface based on the first reference signal.

In a possible design, obtaining link quality of a PC5 interface includes:
sending a second parameter obtaining request to a road side unit RSU having a PC5 interface by using a PC5 interface, so as to request the RSU having the PC5 interface to send a second reference signal by using the PC5 interface;
receiving the second reference signal from the RSU having the PC5 interface by using the PC5 interface; and
measuring the link quality of the PC5 interface based on the second reference signal; and
obtaining a resource usage of the PC5 interface includes:
   measuring a channel busy rate CBR by using the PC5 interface, where CBR is used as the resource usage of the PC5 interface.

In a possible design, obtaining parameters for a second mode includes:
sending a third parameter obtaining request to an RSU operating in the second mode; and
receiving the parameters for the second mode from the RSU.

In a possible design, obtaining parameters for a second mode includes:
switching to a frequency band for the second mode; and
measuring parameters for the second mode on a frequency band for the second mode.

In a broadcast scenario, obtaining a resource usage by using another apparatus, a parameter obtaining request needs to carry an IP address of a target RSU, which increases signaling overheads and makes implementation more complicated, in the inter-frequency switching manner of obtaining a resource usage, the first terminal apparatus does not need to send a parameter obtaining request, which reduces signaling overheads.

According to a second aspect, this application provides a communication apparatus, where the method may be a first terminal apparatus or another apparatus having a function of the first terminal apparatus, and the another apparatus may be used with the first terminal apparatus, for example, the another apparatus may be a chip system in the first terminal apparatus. The apparatus includes a processor, configured to control continuous communication in a first mode of a PC5 interface or over a Uu interface; determine to perform interface switching or mode switching; configure an interface or mode to be switched to; and after the configuration is completed, switch from the first mode of the PC5 interface to the Uu interface for communication, or switch from the first mode of the PC5 interface to a second mode of the PC5 interface for communication, or switch from the Uu interface to the first mode of the PC5 interface for communication, or switch from the Uu interface to the second mode of the PC5 interface for communication.

In a possible design, that the processor is configured to determine to perform interface switching includes: when unicast communication is performed and a Uu interface is available, if a resource usage of a PC5 interface is higher than a first threshold, and/or link quality of the PC5 interface is lower than link quality of the Uu interface, and/or scenario information is applicable to communication over the Uu interface, determine to switch from the PC5 interface to the Uu interface; when unicast communication is performed and a Uu interface is available, if the resource usage of the PC5 interface is lower than the first threshold, and/or the link quality of the PC5 interface is higher than the link quality of the Uu interface, and/or the scenario information is applicable to communication over the PC5 interface, determine to switch from the Uu interface to a first mode or a second mode of the PC5 interface; when unicast communication is performed and a Uu interface is available, if the resource usage for the first mode is lower than a fifth threshold, and/or the link quality of the Uu interface is lower than a sixth threshold, and/or the scenario information is applicable to communication in the first mode, determine to switch from the Uu interface to the first mode of the PC5 interface;
when unicast communication is performed and a Uu interface is available, if the resource usage for the second mode is lower than a seventh threshold, and/or the link quality of the Uu interface is lower than the sixth threshold, and/or the scenario information is applicable to communication in the second mode, determine to switch from the Uu interface to the second mode of the PC5 interface; or when broadcast communication is performed and a Uu interface is available, if the resource usage of the PC5 interface is higher than the first threshold, determine to switch from the PC5 interface to the Uu interface; and/or if the scenario information is applicable to communication over the Uu interface, determine to switch from the PC5 interface to the Uu interface; or when broadcast communication is performed and a terminal apparatus cannot receive downlink information of a network apparatus, determine to switch from the Uu interface to the first mode or the second mode of the PC5 interface; and/or if the resource usage for the second mode is lower than the seventh threshold, and/or the scenario information is applicable to communication in the second mode, determine to switch from the Uu interface to the second mode of the PC5 interface; and/or if the resource usage for the first mode is lower than the fifth threshold, and/or the scenario information is applicable to communication in the first mode, determine to switch from the Uu interface to the first mode of the PC5 interface.

In a possible design, that the processor is configured to determine to perform mode switching includes: when a resource pool for a first mode and a resource pool for a second mode are mutually independent, a resource usage for the first mode is higher than a first threshold, and a resource usage for the second mode is lower than the first threshold, determining to switch from the first mode to the second mode; or if the resource usage for the first mode is higher than the resource usage for the second mode, determining to switch from the first mode to the second mode; or when the resource pool for the first mode and the resource pool for the second mode are shared, and a service transmission delay is lower than a third threshold, determining to switch from the second mode to the first mode; or if a terminal apparatus density is higher than a fourth threshold, determining to switch from the first mode to the second mode; where the first mode is mode 4, and the second mode is mode 3.

In a possible design, that the processor is configured to configure a Uu interface to be switched to includes: controlling the Uu interface to send a first configuration request to a network apparatus, where the first configuration request is used to request first configuration information for the Uu interface; and controlling the Uu interface to receive the first configuration information from the network apparatus.

In a possible design, the first mode is mode 4; and that the processor is configured to configure mode 3 to be switched to includes: controlling the Uu interface to send a second configuration request to the network apparatus, where the second configuration request is used to request second configuration information for mode 3 of a PC5 interface; and controlling the Uu interface to receive the second configuration information from the network apparatus.

In a possible design, the first mode is mode 3; and that the processor is configured to configure mode 4 to be switched to includes: obtaining resource pool information for mode 4; and reserve a resource for mode 4 based on the resource pool information.

In a possible design, that the processor is configured to obtain link quality of a Uu interface includes: controlling sending a first parameter obtaining request to a network apparatus, so as to request the network apparatus to send a first reference signal by using the Uu interface; controlling the Uu interface to receive the first reference signal from the network apparatus; and measuring the link quality of the Uu interface based on the first reference signal.

In a possible design, that the processor is configured to obtain link quality of a PC5 interface includes: controlling the PC5 interface to send a second parameter obtaining request to a road side unit RSU having the PC5 interface, so as to request the RSU having the PC5 interface to send a second reference signal by using the PC5 interface; controlling the PC5 interface to receive a second reference signal from the RSU having the PC5 interface; and measuring the link quality of the PC5 interface based on the second reference signal; and
that the processor is configured to obtain a resource usage of the PC5 interface includes: controlling measuring a channel busy rate CBR by using the PC5 interface, where the CBR is used as the resource usage of the PC5 interface.

In a possible design, that the processor is configured to obtain parameters for a second mode includes: controlling sending a third parameter obtaining request to an RSU operating in the second mode; and controlling receiving the parameters for the second mode from the RSU.

In a possible design, that the processor is configured to obtain parameters for the second mode includes: switching to a frequency band for the second mode; and measuring parameters for the second mode on the frequency band for the second mode.

According to a third aspect, this application provides a communication apparatus, where the method may be a first terminal apparatus or another apparatus having a function of the first terminal apparatus, and the another apparatus may be used with the first terminal apparatus, for example, the another apparatus may be a chip system in the first terminal apparatus. The apparatus includes a processing unit, configured to control continuous communication in a first mode of a PC5 interface or over a Uu interface; determine to perform interface switching or mode switching; configure an interface or mode to be switched to; and after the configuration is completed, switch from the first mode of the PC5 interface to the Uu interface for communication, or switch from the first mode of the PC5 interface to a second mode of the PC5 interface for communication, or switch from the Uu interface to the first mode of the PC5 interface for communication, or switch from the Uu interface to the second mode of the PC5 interface for communication.

In a possible design, that the processing unit is configured to determine to perform interface switching includes: when unicast communication is performed and a Uu interface is available, if a resource usage of a PC5 interface is higher than a first threshold, and/or link quality of the PC5 interface is lower than link quality of the Uu interface, and/or scenario information is applicable to communication over the Uu interface, determining to switch from the PC5 interface to the Uu interface;
when unicast communication is performed and a Uu interface is available, if the resource usage of the PC5 interface is lower than the first threshold, and/or the link quality of the PC5 interface is higher than the link quality of the Uu interface, and/or the scenario information is applicable to communication over the PC5 interface, determining to switch from the Uu interface to a first mode or a second mode of the PC5 interface; when unicast communication is performed and a Uu interface is available, if the resource usage for the first mode is lower than a fifth threshold, and/or the link quality of the Uu interface is lower than a sixth threshold, and/or the scenario information is applicable to communication in the first mode, determining to switch from the Uu interface to the first mode of the PC5 interface; when unicast communication is performed and a Uu interface is available, if the resource usage for the second mode is lower than a seventh threshold, and/or the link quality of the Uu interface is lower than the sixth threshold, and/or the scenario information is applicable to communication in the second mode, determining to switch from the Uu interface to the second mode of the PC5 interface; or when broadcast communication is performed and a Uu interface is available, if the resource usage of the PC5 interface is higher than the first threshold, determining to switch from the PC5 interface to the Uu interface; and/or if the scenario information is applicable to communication over the Uu interface, determining to switch from the PC5 interface to the Uu interface; or when broadcast communication is performed and a terminal apparatus cannot receive downlink information of a network apparatus, determining to switch from the Uu interface to the first mode or the second mode of the PC5 interface; and/or if the resource usage for the second mode is lower than the seventh threshold, and/or the scenario information is applicable to communication in the second mode, determining to switch from the Uu interface to the second mode of the PC5 interface; and/or if the resource usage for the first mode is lower than the fifth threshold, and/or the scenario information is applicable to communication in the first mode, determining to switch from the Uu interface to the first mode of the PC5 interface.

In a possible design, that the processing unit is configured to determine to perform mode switching includes: when a resource pool for a first mode and a resource pool for a second mode are mutually independent, a resource usage for the first mode is higher than a first threshold, and a resource usage for the second mode is lower than the first threshold, determining to switch from the first mode to the second mode; or if the resource usage for the first mode is higher than the resource usage for the second mode, determining to switch from the first mode to the second mode; or when the resource pool for the first mode and the resource pool for the second mode are shared, and a service transmission delay is lower than a third threshold, determining to switch from the second mode to the first mode; or if a terminal apparatus density is higher than a fourth threshold, determining to switch from the first mode to the second mode; where the first mode is mode 4, and the second mode is mode 3.

In a possible design, that the processing unit is configured to configure a Uu interface to be switched to includes: controlling the Uu interface to send a first configuration request to a network apparatus, where the first configuration request is used to request first configuration information for the Uu interface; and controlling the Uu interface to receive the first configuration information from the network apparatus.

In a possible design, the first mode is mode 4; and that the processing unit is configured to configure mode 3 to be switched to includes: controlling the Uu interface to send a second configuration request to the network apparatus, where the second configuration request is used to request second configuration information for mode 3 of a PC5 interface; and controlling the Uu interface to receive the second configuration information from the network apparatus.

In a possible design, the first mode is mode 3; and that the processing unit is configured to configure mode 4 to be switched to includes: obtaining resource pool information for mode 4; and reserve a resource for mode 4 based on the resource pool information.

In a possible design, that the processing unit is configured to obtain link quality of a Uu interface includes: controlling sending a first parameter obtaining request to a network apparatus, so as to request the network apparatus to send a first reference signal by using the Uu interface; controlling the Uu interface to receive the first reference signal from the network apparatus; and measuring the link quality of the Uu interface based on the first reference signal.

In a possible design, that the processing unit is configured to obtain link quality of a PC5 interface includes: controlling the PC5 interface to send a second parameter obtaining request to a road side unit RSU having the PC5 interface, so as to request the RSU having the PC5 interface to send a second reference signal by using the PC5 interface; controlling the PC5 interface to receive a second reference signal from the RSU having the PC5 interface; and measuring the link quality of the PC5 interface based on the second reference signal; and
that the processing unit is configured to obtain a resource usage of the PC5 interface includes: controlling measuring a channel busy rate CBR by using the PC5 interface, where the CBR is used as the resource usage of the PC5 interface.

In a possible design, that the processing unit is configured to obtain parameters for a second mode includes: controlling sending a third parameter obtaining request to an RSU operating in the second mode; and controlling receiving the parameters for the second mode from the RSU.

In a possible design, that the processing unit is configured to obtain parameters for the second mode includes: switching to a frequency band for the second mode; and measuring parameters for the second mode on the frequency band for the second mode.

In any one of the foregoing possible designs, the determining to perform interface switching or mode switching is performed based on one or more of the following parameters: a resource usage for the first mode, a resource usage for the second mode, link quality of the Uu interface, availability of the Uu interface, a resource usage of the PC5 interface, link quality of the PC5 interface, and scenario information, where the scenario information includes location information, service transmission delay information, and terminal apparatus density information.

According to a fourth aspect, this application provides a communication apparatus, where the communication apparatus has a function of implementing the communication method according to any one of the first aspect. This function may be implemented by hardware, or by hardware executing corresponding software. The hardware or software includes one or more modules corresponding to the foregoing function.

According to a fifth aspect, a communication apparatus is provided, including: a processor and a memory. The memory is configured to store a computer executable instruction; and when the communication apparatus runs, the processor executes the computer executable instruction stored in the memory, so that the communication apparatus performs the communication method according to any one of the first aspect.

According to a sixth aspect, a communication apparatus is provided, including: a processor. The processor is configured to: be coupled to the memory; and after reading the instruction in the memory, perform the communication method according to any one of the first aspect.

According to a seventh aspect, a computer readable storage medium is provided, where the computer readable storage medium stores an instruction, and when the instruction is run on a computer, the computer is enabled to perform the communication method according to any one of the first aspect.

According to a tenth aspect, a computer program product including an instruction is provided, where when the computer program product runs on a computer, the computer is enabled to perform the communication method according to any one of the first aspect.

According to a ninth aspect, a circuit system is provided, where the circuit system includes a processing circuit, and the processing circuit is configured to perform the communication method according to any one of the first aspect.

According to a tenth aspect, a chip is provided, where the chip includes a processor; the processor is coupled to a memory; and the memory stores a program instruction, and when the program instruction stored in the memory is executed by the processor, according to any one of the first aspect.

For technical effects of any one of the design methods in the second aspect to the tenth aspect, reference may be made to the technical effects of different design methods in the first aspect, and details are not described herein again.

### BRIEF DESCRIPTION OF DRAWINGS

FIG. 1 is a schematic diagram of communication scenarios of a PC5 interface and a Uu interface according to an embodiment of this application;
FIG. 2 is a schematic diagram of several types of V2X according to an embodiment of this application;
FIG. 3 is a schematic diagram of transmission modes (mode 3 and mode 4) according to an embodiment of this application;
FIG. 4 is a schematic diagram of an architecture of a communication system according to an embodiment of this application;
FIG. 5 is a schematic diagram of an applicable scenario according to an embodiment of this application;
FIG. 6 is a schematic diagram of several switching types according to an embodiment of this application;
FIG. 7 is a schematic flowchart of a communication method according to an embodiment of this application;
FIG. 8 is a schematic diagram of a scenario of a communication method according to an embodiment of this application;
FIG. 9 to FIG. 11 are schematic flowcharts of a communication method according to an embodiment of this application; and
FIG. 12 and FIG. 13 are schematic diagrams of structures of communication apparatuses according to embodiments of this application.

### DESCRIPTION OF EMBODIMENTS

The terms "first" and "second" in the specification and accompanying drawings of this application are used to distinguish different objects or different processing of the same object, rather than to describe a specific order of the objects. In addition, the terms "including" and "having" and any variations thereof mentioned in descriptions of this application are intended to cover non-exclusive inclusion. For example, a process, method, system, product, or device including a series of steps or units is not limited to the listed steps or units, but optionally further includes steps or units not listed, or optionally further includes other steps or units inherent to such a process, method, product, or device. It should be noted that, in embodiments of this application, the words such as "example" or "for example" are used to indicate provision of examples, illustrations or descriptions. Any embodiment or design scheme described as "example" or "for example" in the embodiments of this application should not be interpreted as being more preferred or advantageous than other embodiments or design schemes. To be precise, the use of the word such as "example" or "for example" is intended to present a related concept in a specific manner.

First, technical terms used in the embodiments of this application are described.
1. Mode 3 (mode 3) in LTE: Referring to FIG. 3(a), mode 3 is mainly applied to V2X communication when network coverage is available, that is, a mode of V2X communication scheduled by a network apparatus. A terminal sends a scheduling request to a base station, and the base station performs resource allocation based on a buffer status report (buffer status report, BSR) reported by the terminal. The terminal performs V2X communication on a scheduled time-frequency resource based on a scheduling grant of the base station. The scheduling request and the scheduling grant are transmitted by using an uplink and a downlink between the base station and the terminal, and direct communication between the terminals are performed by using an SL. Certainly, mode X is merely a name for V2X communication scheduled by the network apparatus, and may also be referred to as another name. For example, in NR, V2X communication scheduled by the network apparatus is referred to as mode 1 (mode 1) communication.
2. Mode 4 (mode 4 in LTE: Referring to FIG. 3(b), a terminal selects a time-frequency resource in a preconfigured V2X resource pool, and performs V2X communication on the selected time-frequency resource. Certainly, mode X is only a name for V2X communication in which the terminal actively selects the V2X transmission resource, and may also be referred to as another name. For example, in NR, V2X communication in which the terminal actively selects the V2X transmission resource (also referred to as terminal-autonomous V2X communication) is referred to as mode 2 (mode 2) communication.

The Uu interface may support the mode of V2X communication scheduled by the network apparatus, and the PC5 interface may support the mode of V2X communication scheduled by the network apparatus and the mode of terminal-autonomous V2X communication. That is, the terminal may perform V2X communication with another terminal by using the PC5 interface under control of the network apparatus, or may perform V2X communication with another terminal by using the PC5 interface without being controlled by the network apparatus.

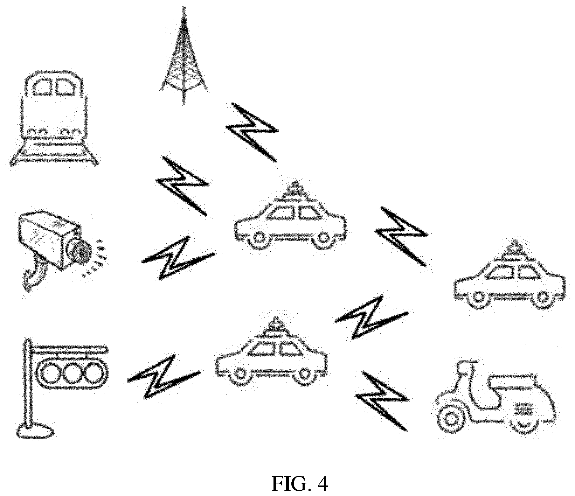

The communication method provided in this embodiment of this application may be applied to a scenario in which a communication interface is switched or a communication mode is switched. FIG. 4 shows a communication system according to an embodiment of this application. The communication system includes a terminal apparatus and a network apparatus. The terminal apparatus may be connected to the network apparatus by using an air interface, so as to receive a network service. The network apparatus is mainly configured to implement a function of a radio physical layer, resource scheduling, radio resource management, radio access control, and a mobility management function.

In addition, communication may be directly performed between the terminal apparatuses by using an SL. It is easy to understand that the resource pool used for direct communication by using the SL may be a resource pool configured by the network apparatus, for example, a resource pool used when the terminal apparatus is connected to the air interface of the network apparatus normally, or may be a resource pool preconfigured in the terminal apparatus, for example, a resource pool preconfigured by a device manufacturer in the terminal apparatus in advance based on a protocol before the terminal apparatus is delivered from a factory.

For example, the direct communication between the terminal apparatuses by using the SL may be the above-mentioned V2V, V2I, V2N or V2P communication, or may be another form of direct communication between terminal apparatuses, such as pedestrian to pedestrian (pedestrian to pedestrian, P2P) communication.

In addition, in addition to the SL, the direct communication between the terminal apparatuses may also be performed by using a wireless connection in another form or a wireless connection having another name, such as a future wireless communication system or a 6G system. This is not limited in this application.

The network apparatus may refer to a network device having a wireless transceiving function, or may refer to a component (such as a chip system) disposed in the network device, or another form. The network apparatus includes but is not limited to: an access point (access point, AP) in a Wi-Fi system, such as a home wireless router, a wireless relay node, a wireless backhaul node, a point, and a transmission point (transmission and reception point, TRP, or transmission point, TP), an eNB, a radio network controller (radio network controller, RNC), a node B (node B, NB), a base station controller (base station controller, BSC), a base transceiver station (base transceiver station, BTS), a home base station (for example, home evolved nodeB, or home node B, HNB), a baseband unit (baseband unit, BBU). The network apparatus may also be a gNB or a transmission point (TRP or TP) in a 5G system (for example, NR), or an antenna panel or a group of antenna panels (including a plurality of antenna panels) of a base station in the 5G system, or may be a network node that constitutes a gNB or transmission node, such as a baseband unit (BBU) or a distributed unit (distributed unit, DU). When a road side unit (road side unit, RSU) is implemented by using a network apparatus, the network apparatus may include an RSU. Such an RSU may send and receive information by using a Uu interface, and may be referred to as an eNB type RSU.

In some deployments, the gNB may include a centralized unit (centralized unit, CU) and a distributed unit (distributed unit, DU). The gNB may further include a radio unit (radio unit, RU). The CU implements some functions of the gNB, and the DU implements some functions of the gNB. For example, the CU implements functions of a radio resource control (radio resource control, RRC) layer, a packet data convergence protocol (packet data convergence protocol, PDCP) layer, and a service discovery application profile (service discovery application profile, SDAP) layer, and implements functions of a radio link control (radio link control, RLC) layer, a media access control (media access control, MAC) layer, and a physical (physical, PHY) layer. Information of the RRC layer eventually becomes information of the PHY layer or is converted from the information of the PHY layer, and therefore, in this architecture, higher layer signaling, such as signaling of an RRC layer or signaling of the PHCP layer signaling, may be considered to be transmitted by the DU or DU+RU. It can be understood that the network apparatus may be a CU node, a DU node, or a device including a CU node and a DU node. In addition, the CU may be classified as a network apparatus in a radio access network (radio access network, RAN), or may be classified as network apparatuses in a core network (core network, CN). This is not limited herein.

The terminal apparatus may be user equipment having a wireless transceiving function, or may be a component (such as a chip system) disposed in the user equipment. For example, the terminal apparatus may also be referred to as a station (station, STA), user equipment (user equipment, UE), an access terminal, a subscriber unit, a subscriber station, a mobile station, a mobile console, a remote station, a remote terminal, a mobile device, a user terminal, a wireless communication device, a user agent, or a user apparatus. The terminal apparatus includes but is not limited to a mobile phone (mobile phone), a tablet computer (Pad), a computer having a wireless transceiving function, a virtual reality (virtual reality, VR) terminal apparatus, an augmented reality (augmented reality, AR) terminal apparatus, a wireless terminal in industrial control (industrial control), a wireless terminal in self driving (self driving), a wireless terminal in transportation safety (transportation safety), a wireless terminal in a smart city (smart city), a terminal in the Internet of Vehicles (for example, a car terminal), or a sensor type device (such as a monitoring terminal). When a road side unit (road side unit, RSU) is implemented by using a terminal apparatus, the terminal apparatus may include the RSU. Such an RSU may send and receive information by using a PC5 or Uu interface, and may be referred to as a UE type RSU.

It should be understood that FIG. 4 is only a simplified schematic diagram used as an example for ease of understanding, and shows only a terminal apparatus and a network apparatus (for example, a base station). In this embodiment of this application, the wireless communication system may further include another network apparatus, and/or may further include another terminal apparatus, which is not shown in FIG. 4.

The terms "first" and "second" in the specification and accompanying drawings of this application are used to distinguish different objects or different processing of the same object, rather than to describe a specific order of the objects.

"At least one" means one or more.

"A plurality of" means two or more.

The term "and/or" describes an association relationship between associated objects, and indicates that three relationships may exist. For example, A and/or B may indicate the following: Only A exists, both A and B exist, and only B exists, where A and/or B may indicate a singular or plural form.

The character "/" generally indicates an "or" relationship between associated objects, for example, A/B may indicate either A or B.

In addition, the terms "including" and "having" and any variations thereof mentioned in descriptions of this application are intended to cover non-exclusive inclusion. For example, a process, method, system, product, or device including a series of steps or units is not limited to the listed steps or units, but optionally further includes steps or units not listed, or optionally further includes other steps or units inherent to such a process, method, product, or device.

In embodiments of this application, the words such as "example" or "for example" are used to indicate provision of examples, illustrations or descriptions. Any embodiment or design scheme described as "example" or "for example" in the embodiments of this application should not be interpreted as being more preferred or advantageous than other embodiments or design schemes. To be precise, the use of the word such as "example" or "for example" is intended to present a related concept in a specific manner.

In the specification and accompanying drawings of this application, "of (English: of)", "corresponding (English: corresponding or relevant)", "corresponding (English: corresponding) (English: Corresponding)" may be sometimes used interchangeably. It should be noted that, when a difference is not emphasized, meanings expressed by these terms are the same.

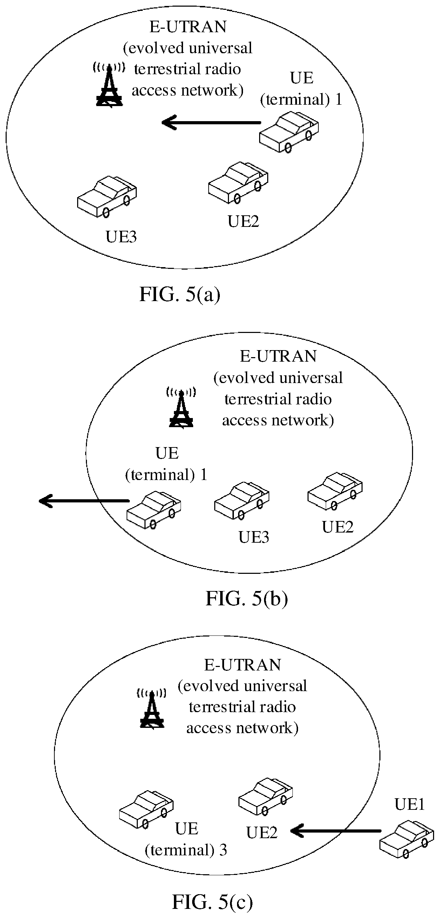

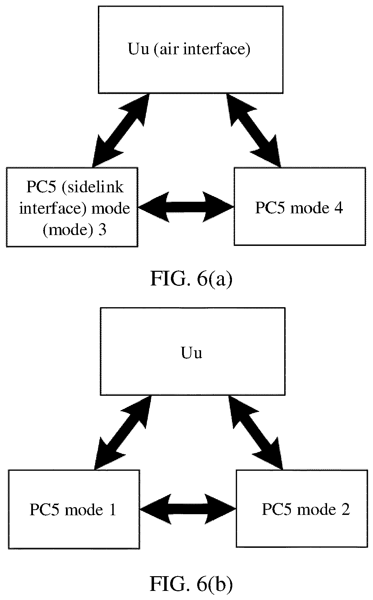

The technical solutions in this embodiment of this application relate to but are not limited to the three scenarios shown in FIG. 5, that is, in the coverage area of the terminal in FIG. 5(a), in the coverage area of the terminal in FIG. 5(b), and in the coverage area of the terminal in FIG. 5(c), Based on factors such as a corresponding scenario, a communication interface used in the scenario, a resource configuration mode (or referred to as a resource scheduling mode), communication link quality, and a user requirement, there are six possible switching types, that is, switching between a Uu interface, a first mode of a PC5 interface, and a second mode of the PC5 interface. Specifically, in LTE, there are six types of switching shown in FIG. 6(a), that is, switching between the Uu interface, mode 3 of the PC5 interface, and mode 4 of the PC5 interface. In 5G, there are six switching types shown in FIG. 6(b), that is, switching between the Uu interface, mode 1 of the PC5 interface, and mode 2 of the PC5 interface.

The following describes the communication method provided in an embodiment of this application with reference to the accompanying drawings.

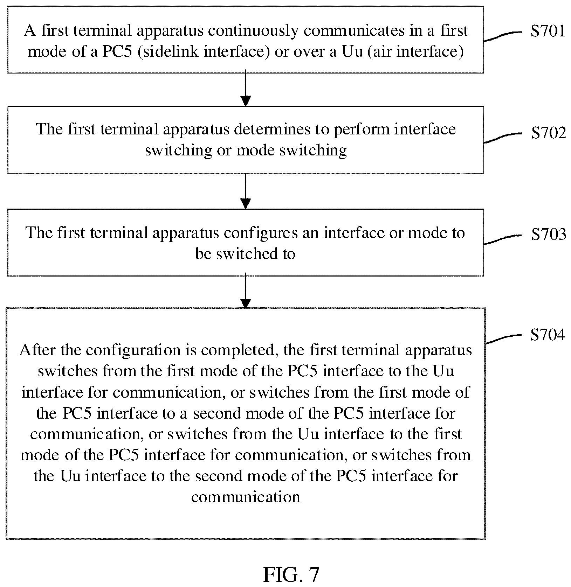

Referring to FIG. 7, using application in an LTE communication system as an example, the communication method in this embodiment of this application includes the following steps:
S701. A first terminal apparatus continuously communicates in a first mode of a PC5 interface or over a Uu interface.
S702. The first terminal apparatus determines to perform interface switching or mode switching.

Specifically, the first terminal apparatus determines, based on one or more of the following parameters, whether to perform interface switching or mode switching: a resource usage for the first mode, a resource usage for a second mode, link quality of the Uu interface, availability of the Uu interface, a resource usage of the PC5 interface, link quality of the PC5 interface, and scenario information. The interface switching includes switching from the Uu interface to the first mode or the second mode of the PC5 interface, or switching from the PC5 interface to the Uu interface. The mode switching of the first terminal apparatus includes switching from the first mode of the PC5 interface to the second mode of the PC5 interface, or switching from the second mode of the PC5 interface to the first mode of the PC5 interface.

In this embodiment of this application, the resource usage may be reflected by using a parameter channel busy rate (channel busy rate, CBR).

Link quality may be reflected by using a reference signal receiving power (RSRP), reference signal receiving quality (RSRQ), or a path loss (path loss). Certainly, the resource usage and the link quality may alternatively be separately reflected by using other parameters. This is not limited in this embodiment of this application.

The scenario information includes location information, service transmission delay information, and terminal apparatus density information. A location of a UE may be identified in combination with an electronic map.

Generally, in a unicast communication scenario and a broadcast communication scenario, specific manners of obtaining parameters used to determine interface switching or mode switching may be different. The following separately describes specific solutions of obtaining parameters in the unicast communication scenario and the broadcast communication scenario, and determining, based on the obtained parameters, whether to perform interface switching or mode switching.

### 1. Unicast communication scenario

In the unicast communication scenario, parameters used to determine whether to perform interface switching include one or more of the following: a parameter of the Uu interface, a parameter of the PC5 interface, parameters for the first mode, and parameters for the second mode. Optionally, the terminal may further include scenario information.

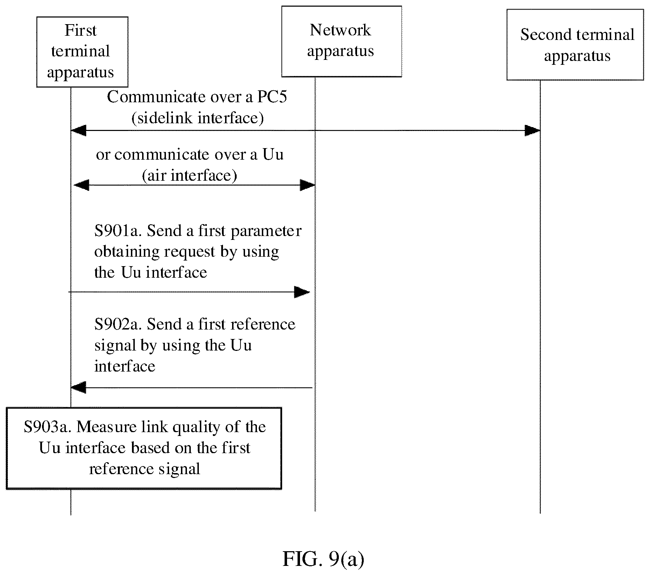

Parameters of the Uu interface in the unicast scenario include link quality of the Uu interface and availability of the Uu interface. In a possible implementation, the first terminal apparatus performs unicast communication, and it is possible that the first terminal apparatus is communicating by using a Uu interface or communicating by using a PC5 interface. When the Uu interface is used for communication (receiving and transmitting data), although it is possible that the PC5 interface is not used, the PC5 interface is also in an available state, that is, the PC5 interface may be used to receive and transmit some information. Similarly, when the PC5 interface is used for communication, although it is possible that the Uu interface is not used, the Uu interface is in an available state. Referring to FIG. 9(a), that the first terminal apparatus obtains the link quality of the Uu interface in the unicast scenario may be specifically implemented as follows: S901a. The first terminal apparatus sends the first parameter obtaining request to the network apparatus by using the Uu interface, so as to request the network apparatus to send the first reference signal by using the Uu interface. S902a. The network apparatus sends a first reference signal to the first terminal apparatus based on the first parameter obtaining request. Correspondingly, the first terminal apparatus receives the first reference signal from the network apparatus by using the Uu interface. S903a. The first terminal apparatus measures link quality of the Uu interface based on the first reference signal. Optionally, the first terminal apparatus may measure an RSRP of the first reference signal, and determine link quality of the Uu interface based on the measured RSRP. When the RSRP is higher than a certain threshold, the link quality of the Uu interface is good; or when the RSRP is lower than a certain threshold, the link quality of the Uu interface is poor. Optionally, the first terminal apparatus may measure the RSRQ of the first reference signal, and determine the link quality of the Uu interface based on the measured RSRQ. When the RSRQ is higher than a certain threshold, the link quality of the Uu interface is good; or when the RSRQ is lower than a certain threshold, the link quality of the Uu interface is poor. Alternatively, the first terminal apparatus may determine the link quality of the Uu interface by measuring a path loss parameter of the first reference signal. A value of the path loss parameter is equal to a difference between a transmit power and a receive power of the first reference signal. The network apparatus notifies the first terminal apparatus of the transmit power of the first reference signal; and the receive power of the first reference signal is obtained by the first terminal apparatus through measurement. Generally, a larger value of the path loss parameter between the first terminal apparatus and the network apparatus indicates a larger difference between the receive power and the transmit power of the first reference signal between the first terminal apparatus and the network apparatus and lower link quality of the Uu interface. On the contrary, a smaller value of the path loss parameter indicates a smaller difference between the receive power and the transmit power and higher link quality of the Uu interface.

It should be noted that the parameter obtaining request (signaling) sent by using the Uu interface and the data sent by using the Uu interface may be isolated in one or more manners, such as time division, frequency division, space division, and code division.

In this embodiment of this application, if the first terminal apparatus can receive downlink information from the network apparatus by using the Uu interface, it is considered that the Uu interface of the first terminal apparatus is available. On the contrary, if the first terminal apparatus fails to receive the downlink information from the network apparatus within a time period, it is considered that the Uu interface of the first terminal apparatus is unavailable.

When the first terminal apparatus performs unicast communication, parameters of the PC5 interface in the unicast scenario include a resource usage and/or link quality of the PC5 interface.

In a possible implementation, in a scenario in which the first terminal apparatus performs unicast communication, the first terminal apparatus may measure a CBR by using a PC5 interface, and use the CBR as an indicator that reflects a resource usage.

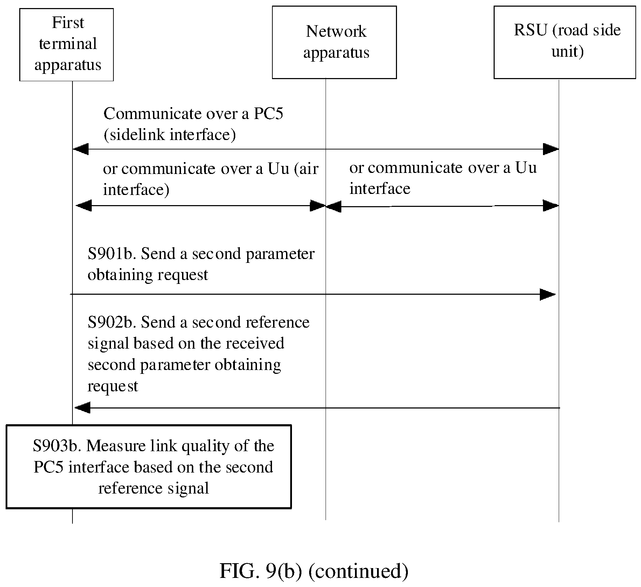

In a possible implementation, in a scenario in which the first terminal apparatus performs unicast communication, the first terminal apparatus obtains the link quality of the PC5 interface. Referring to FIG. 9(b), the first terminal apparatus may be specifically implemented as follows: S901b. The first terminal apparatus sends a second parameter obtaining request to an RSU having the PC5 interface. Correspondingly, the RSU having the PC5 interface receives the second parameter obtaining request from the first terminal apparatus. The second parameter obtaining request is used to request the RSU to send a second reference signal by using the PC5 interface.

If the first terminal apparatus is currently communicating with the RSU by using the Uu interface, and the first terminal apparatus needs to measure link quality of the PC5 interface, the first terminal apparatus may send a second parameter obtaining request to the RSU by using the Uu interface. Certainly, the first terminal apparatus may alternatively send the second parameter obtaining request to the RSU by using the PC5 interface. In this way, the current Uu interface communication of the first terminal apparatus is not affected, and service continuity of the Uu interface is ensured. Similarly, if the first terminal apparatus is currently communicating with the RSU by using the PC5 interface, and the first terminal apparatus needs to measure link quality of the PC5 interface, the first terminal apparatus may send a second parameter obtaining request to the RSU by using the PC5 interface. Certainly, the first terminal apparatus may alternatively send the second parameter obtaining request to the RSU by using the Uu interface. The RSU may be a UE type RSU or an eNB type RSU.

S902b. The second terminal apparatus sends the second reference signal to the first terminal apparatus by using the PC5 interface based on the received second parameter obtaining request. Correspondingly, the first terminal apparatus receives the second reference signal from the second terminal apparatus by using the PC5 interface.

S903b. The first terminal apparatus measures the link quality of the PC5 interface based on the second reference signal. Optionally, the first terminal apparatus may measure an RSRP of the received second reference signal, and determine the link quality of the PC5 interface based on the measured RSRP. Alternatively, the first terminal apparatus may measure the RSRQ of the second reference signal, and determine the link quality of the PC5 interface based on the measured RSRQ. Alternatively, the first terminal apparatus may determine the link quality of the PC5 interface by measuring a path loss parameter of the second reference signal.

In parameters used to determine whether to perform interface switching, parameters for the first mode include a resource usage for the first mode. Parameters for the second mode include a resource usage for the second mode. The first terminal apparatus may measure the resource usage for the first mode and/or the resource usage for the second mode, or may obtain the resource usage for the first mode and/or the resource usage for the second mode from another apparatus.
1. The first terminal apparatus obtains the resource usage for the first mode and/or the resource usage for the second mode from the another apparatus.

If the first terminal apparatus is currently operating in the first mode, the first terminal apparatus may measure the resource usage for the first mode.

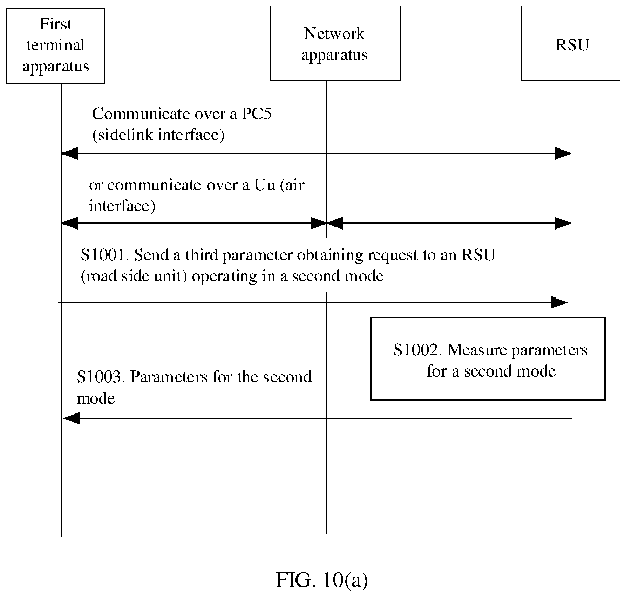

Referring to FIG. 10(a), that the first terminal apparatus obtains the resource usage for the second mode may be implemented as follows: S1001. The first terminal apparatus sends a third parameter obtaining request to an RSU operating in the second mode.

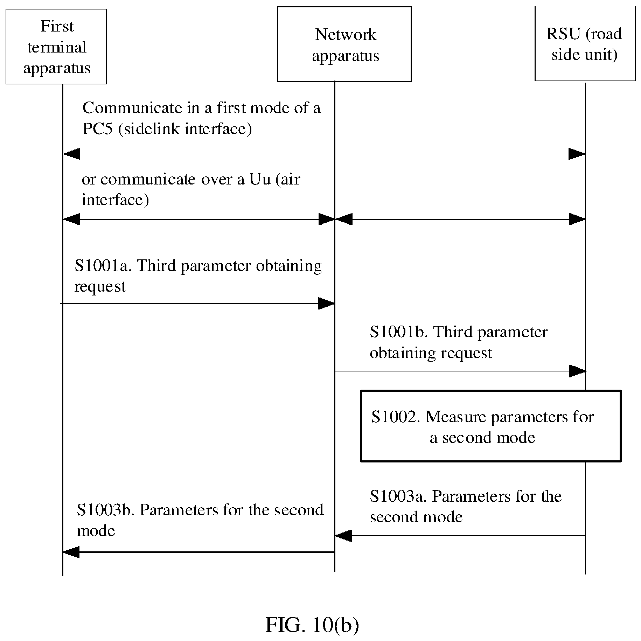

That the technical solution in this embodiment of this application is applied to an LTE system is used as an example. If the second mode is mode 3, the RSU operating in mode 3 may refer to an eNB type RSU or a UE type RSU controlled by a network apparatus (for example, a base station). Correspondingly, referring to FIG. 10(b), S1001 may be implemented as follows: S1001a. The first terminal apparatus sends the third parameter obtaining request to the network apparatus by using the Uu interface; and S1001b. The network apparatus sends the third parameter obtaining request to the eNB type RSU or the UE type RSU under control by using the Uu interface.

If the second mode is mode 4, the RSU operating in mode 4 may be an eNB type RSU or a UE type RSU that is not controlled by the base station and that can be directly connected to the first terminal apparatus. Correspondingly, S1001 may be implemented as follows: The first terminal apparatus sends the third parameter obtaining request to the RSU operating in the second mode by using the PC5 interface.

S1002. The RSU measures parameters for the second mode. In a possible implementation, if the RSU is not currently operating in the second mode, the RSU switches, based on the received third parameter obtaining request, to operate in the second mode, and measures the parameters for the second mode. Alternatively, if the RSU is currently operating in the second mode, the RSU does not need to perform a switching action and directly measures the parameters for the second mode.

S1003. The RSU sends parameters for the second mode to the first terminal apparatus. Correspondingly, the first terminal apparatus receives the parameters for the second mode from the RSU.

In a possible implementation, when the first mode is mode 3, referring to FIG. 10(b), S1003 may be specifically implemented as follows: S1003a. The RSU send the parameter in the second mode to the network apparatus by using the Uu interface. S1003b. The network apparatus sends the parameters for the second mode to the first terminal apparatus.

When the first mode is mode 4, S1003 may be specifically implemented as follows: The RSU sends the parameters for the second mode to the first terminal device by using the PC5 interface.

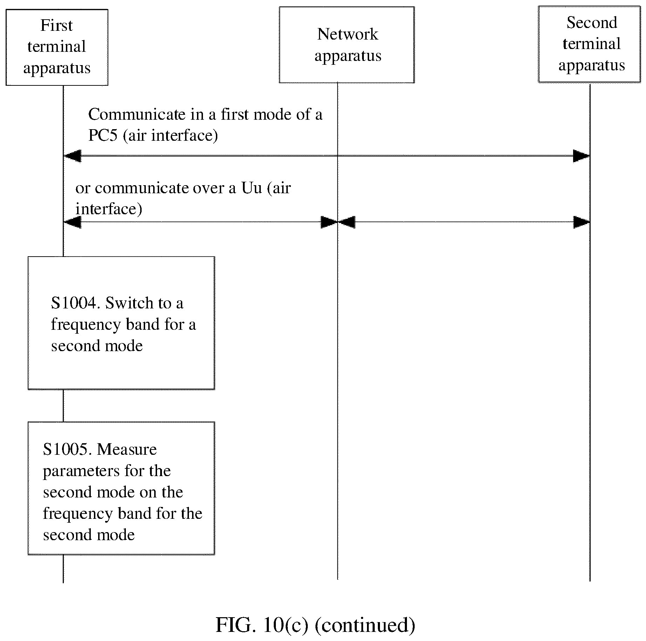

2. The first terminal apparatus measures the parameters for the second mode (which may also be referred to as an inter-frequency switching manner). Specifically, referring to FIG. 10(c), obtaining the parameters for the second mode includes: S1004. The first terminal apparatus switches to a frequency band for the second mode; and S1005. The first terminal apparatus measures the parameters for the second mode on the frequency band for the second mode.

After measuring the parameters for the second mode, the first terminal apparatus switches back to the original interface for communication. Because a time required for the process is relatively short (about 6 ms), normal communication of the first terminal apparatus is not affected.

In the unicast communication scenario, parameters used to determine whether to perform mode switching include a resource usage of the first mode and a resource usage of the second mode. Optionally, the terminal may further include scenario information. For a manner of obtaining the resource usage, refer to the foregoing description. Details are not described herein again.

In the unicast communication scenario, after obtaining the parameters used to determine interface switching, the first terminal apparatus may determine, based on the obtained parameters, whether to perform interface switching. Specifically, when the first terminal apparatus performs unicast communication and the Uu interface is available, the resource usage of the PC5 interface is higher than the first threshold, and/or the link quality of the PC5 interface is lower than the link quality of the Uu interface, and/or the link quality of the PC5 interface is lower than the second threshold, and the link quality of the Uu interface is higher than the second threshold, and/or the scenario information is applicable to communication over the Uu interface, determines to switch from the PC5 interface to the Uu interface. That is, the first terminal apparatus currently communicates by using the Uu interface or the PC5 interface, and may obtain parameters of the Uu interface and the PC5 interface. When the Uu interface is available, the first terminal apparatus may only determine whether resource utilization (which may be represented by a CBR) of the PC5 interface is higher than a first threshold, so as to determine whether to switch from the PC5 interface to the Uu interface for communication. Alternatively, only determine a magnitude relationship between the link quality of the PC5 interface and the link quality of the Uu interface is determined, so as to determine to maintain communication over the PC5 interface with relatively high link quality, or to switch to the Uu interface with relatively high link quality for communication. Certainly, the first terminal apparatus may alternatively determine, in combination with two parameters. That is, when the resource usage of the PC5 interface is higher than the first threshold, and the link quality of the PC5 interface is lower than the link quality of the Uu interface, the first terminal apparatus switches from the PC5 interface to the Uu interface for communication. In a possible implementation, the first terminal apparatus may further determine, in combination with the scenario information, whether to perform interface switching. Specifically, if whether to perform interface switching cannot be determined based on the parameter of the PC5 interface and the parameter of the Uu interface, for example, when the Uu interface is available and the resource usage of the PC5 interface is lower than the first threshold, or when the Uu interface is available and the link quality of the PC5 interface and the link quality of the Uu interface are both higher than the second threshold, or when the Uu interface is available, the link quality of the PC5 interface is higher than the second threshold, and the resource usage of the PC5 interface is lower than the first threshold, in these cases, it indicates that both the Uu interface and the PC5 interface are selectable communication interfaces, and a specific interface cannot be selected based on the resource usage and/or the link quality. In this case, the first terminal apparatus may determine, based on the scenario information, whether to perform interface switching. For example, the scenario information indicates that the first terminal apparatus is located in a coverage area of the network apparatus, and the first terminal apparatus may select the Uu interface as a communication interface.

Based on a same principle, in the unicast communication scenario, when the first terminal apparatus performs unicast communication and the Uu interface is available, the resource usage of the PC5 interface is lower than the first threshold, the link quality of the PC5 interface is higher than the link quality of the Uu interface, and/or the link quality of the PC5 interface is higher than the second threshold, the link quality of the Uu interface is lower than the second threshold, and/or the scenario information is applicable to communication over the PC5 interface, the first terminal apparatus determines to use the PC5 interface for communication, and in this case, the first terminal apparatus may randomly determine to use the first mode or the second mode of the PC5 interface for communication;
and/or when unicast communication is performed and the Uu interface is available, the resource usage for the first mode is lower than the fifth threshold, and the link quality of the Uu interface is lower than the sixth threshold, and/or the scenario information is applicable to communication in the first mode, the first terminal apparatus determines to switch from the Uu interface to the first mode of the PC5 interface;
and/or when unicast communication is performed and the Uu interface is available, the resource usage for the second mode is lower than the seventh threshold, and the link quality of the Uu interface is lower than the sixth threshold, and/or the scenario information is applicable to communication in the second mode, the first terminal apparatus determines to switch from the Uu interface to the second mode of the PC5 interface.

When the Uu interface is unavailable, the first terminal apparatus can communicate only by using the PC5 interface.

In the unicast communication scenario, after obtaining the parameters used to determine whether to perform mode switching, the first terminal apparatus may determine, based on the obtained parameters, whether to perform mode switching. Therein, in the case of whether a resource pool for the first mode and a resource pool for the second mode are independent, the manners in which the first terminal apparatus determines whether to perform mode switching are different.

When the resource pool for the first mode and the resource pool for the second mode are mutually independent, if the resource usage for the first mode is higher than (greater than or equal to) the first threshold and the resource usage for the second mode is lower than the first threshold, determines to switch from the first mode to the second mode; or when the resource usage for the first mode is higher than the resource usage for the second mode, the first terminal apparatus determines to switch from the first mode to the second mode. On the contrary, if the resource usage for the first mode is lower than the first threshold, and the resource usage for the second mode is higher than the first threshold, the first terminal apparatus determines to use the first mode for communication; or when the resource usage for the first mode is lower than the resource usage for the second mode, determines to use the first mode for communication.

That is, for a case in which a resource pool for mode 3 and a resource pool for mode 4 in are mutually independent in Release 14, when the resource usage for one of the modes is higher, the UE in this mode tends to switch to the other mode.

If the resource pool for the first mode and the resource pool for the second mode are shared, using application in an LTE system as an example, the first mode is mode 4, and the second mode is mode 3. When a service transmission delay in the scenario information is lower than a third threshold, the first terminal apparatus determines to switch from mode 3 to mode 4; or when the terminal apparatus density is higher than the fourth threshold, the first terminal apparatus determines to switch from mode 4 to mode 3.

That is, for a case in which the resource pool for mode 3 and the resource pool for mode 4 are shared in Release 15, because sidelink mode 4 is vehicle-to-vehicle direct communication, a transmission delay in this mode is lower than a transmission delay in sidelink mode 3. Therefore, if the UE needs a service with a high delay requirement, the UE will tend to switch to sidelink mode 4. An obvious advantage of sidelink mode 3 over mode 4 is that the base station performs overall management on resources. Therefore, in a scenario in which a vehicle density is high, mode 4 is more likely to cause a collision than mode 3 during resource selection. In this case, the UE tends to switch to sidelink mode 3, so as to reduce a probability of a resource collision with another terminal apparatus.

It can be learned that in this embodiment of this application, considering switching between mode 3 and mode 4, the probability of a resource collision can be reduced in some scenarios, and network resource utilization can be improved. In addition, a probability of service success can be improved, and safety performance of the Internet of Vehicles and quality of user experience in driving service can be improved.

### 2. Broadcast communication scenario

In the broadcast communication scenario, parameters used to determine whether to perform interface switching includes one or more of the following: a resource usage of the PC5 interface, availability of the Uu interface, a resource usage for the first mode, a resource usage for the second mode, and the scenario information. For a manner of obtaining the resource usage, refer to the manner of obtaining the resource usage in the foregoing unicast communication scenario. Details are not described herein again.

When broadcast communication is performed and a Uu interface is available, if the resource usage of the PC5 interface is higher than the first threshold, the first terminal apparatus determines to switch from the PC5 interface to the Uu interface; and/or if the scenario information is applicable to communication over the Uu interface, the first terminal apparatus determines to switch from the PC5 interface to the Uu interface.

That is, the first terminal apparatus may determine only one of the following two parameters: the resource usage of the PC5 interface and the scenario information, so as to determine whether to perform interface switching.

Alternatively, when whether to perform interface switching cannot be determined by using a specific type of parameter, determining may be performed in combination with two parameters; that is, when the resource usage of the PC5 interface is lower than the first threshold, if the scenario information is applicable to communication over the Uu interface, the first terminal apparatus uses the Uu interface for communication.

On the contrary, when the scenario information is applicable to communication over the PC5 interface, and/or the resource usage of the PC5 interface is lower than the first threshold, the first terminal apparatus uses the PC5 interface for communication. Alternatively, when broadcast communication is performed and the terminal apparatus cannot receive downlink information of the network apparatus (that is, the Uu interface is unavailable), the first terminal apparatus switches from the Uu interface to the PC5 interface. In a possible implementation, the first terminal apparatus randomly uses the first mode or the second mode of the PC5 interface for communication; and/or when the resource usage for the second mode is lower than the seventh threshold, and/or the scenario information is applicable to communication in the second mode, the first terminal apparatus determines to switch from the Uu interface to the second mode of the PC5 interface; and/or when the resource usage for the first mode is lower than the fifth threshold, and/or the scenario information is applicable to communication in the first mode, the first terminal apparatus determines to switch from the Uu interface to the first mode of the PC5 interface.

In the broadcast communication scenario, parameters used to determine whether to perform mode switching include a resource usage for the first mode and a resource usage for the second mode. Optionally, the parameters further include scenario information. For a manner of obtaining the resource usage, refer to the manner of obtaining the resource usage in the foregoing unicast communication scenario. A difference is that in the broadcast scenario, in the manner of obtaining the resource usage by using another apparatus, the third parameter obtaining request needs to carry an IP address of a target RSU, which increases signaling overheads and makes implementation more complicated. However, in the inter-frequency switching manner of obtaining a resource usage, the first terminal apparatus does not need to send a parameter obtaining request, which reduces signaling overheads.

It can be learned that if the communication quality of the current interface or mode is too poor to meet a quality of service (quality of service, QoS) requirement of the UE, or the UE needs to perform a service and the service needs to be switched to a new interface or mode to meet a requirement, or the UE is in a scenario in which an interface is more suitable for communication, the UE may switch an interface or mode based on the foregoing switching policy. In addition, if the communication quality of the currently used communication interface or mode is too poor to ensure normal communication, or the UE needs to use a specific type of interface or mode for communication, the UE may also switch to another interface or mode.

S703. The first terminal apparatus configures an interface or mode to be switched to.

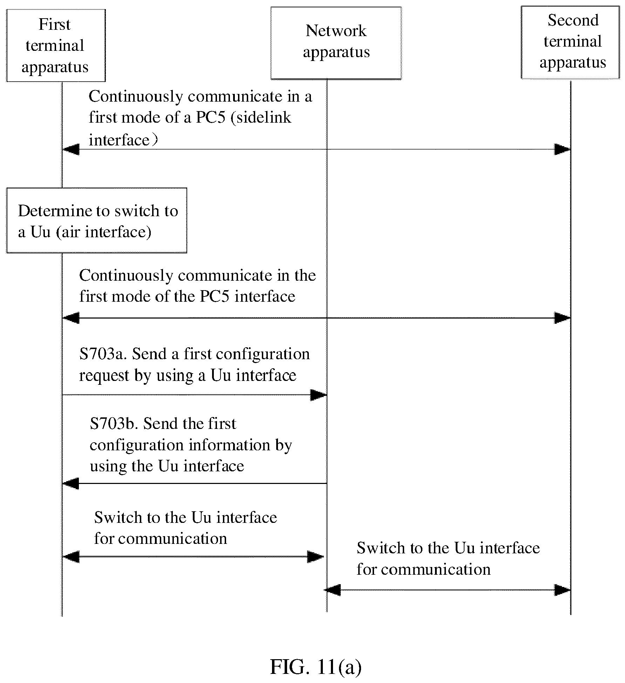

In an example, when the first terminal apparatus is continuously communicating in the first mode of the PC5 interface, after the foregoing steps are performed, the first terminal apparatus determines to switch from the PC5 interface to the Uu interface. Referring to FIG. 11(a), S703 may be specifically implemented as follows: S703a. The first terminal apparatus sends a first configuration request to the network apparatus by using the Uu interface, where the first configuration request is used to request first configuration information for the Uu interface; and S703b. The network apparatus sends the first configuration information to the first terminal apparatus by using the Uu interface. Correspondingly, the first terminal apparatus receives the first configuration information from the network apparatus by using the Uu interface.

The first configuration information includes but is not limited to resource configuration.

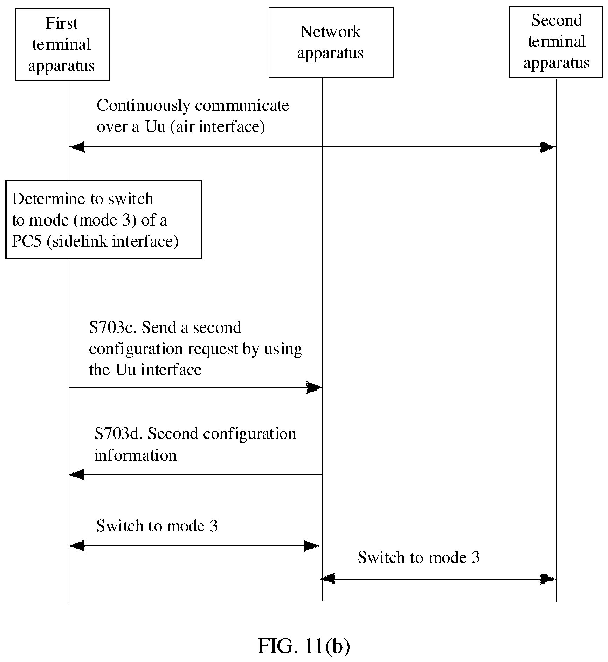

In an example, if the first terminal apparatus is currently continuously communicating by using the Uu interface, and the first terminal apparatus determines, by using the parameter of the Uu interface and the parameter of the PC5 interface, to switch to mode 3 of the PC5 interface for communication, mode 3 needs to be configured. Specifically, referring to FIG. 11(b), the configuration of mode 3 to be switched to may be implemented as follows: S703c. The first terminal apparatus sends a second configuration request to the network apparatus by using the Uu interface, where the second configuration request is used to request second configuration information for mode 3 of the PC5 interface; and S703d. The network apparatus sends second configuration information to the first terminal apparatus. Correspondingly, the first terminal apparatus receives the second configuration information from the network apparatus by using the Uu interface.

It is easy to understand that, because resources for mode 3 are configured by the network apparatus (for example, a base station) in a centralized manner, when the terminal performs uplink/downlink communication, the terminal may obtain configuration information delivered by the network apparatus, and then switch to mode 3. Specifically, after sending one UL data packet, the first terminal apparatus may immediately send the second configuration request to the base station, and then continue to perform normal uplink/downlink communication. Because a sending interval of UL data packets during normal communication is relatively large, signaling of the second configuration request does not affect or slightly affects smoothness of normal communication. After receiving the second configuration request, the base station may deliver the second configuration information to the first terminal apparatus, so that the first terminal apparatus switches to mode 3 based on the configuration.

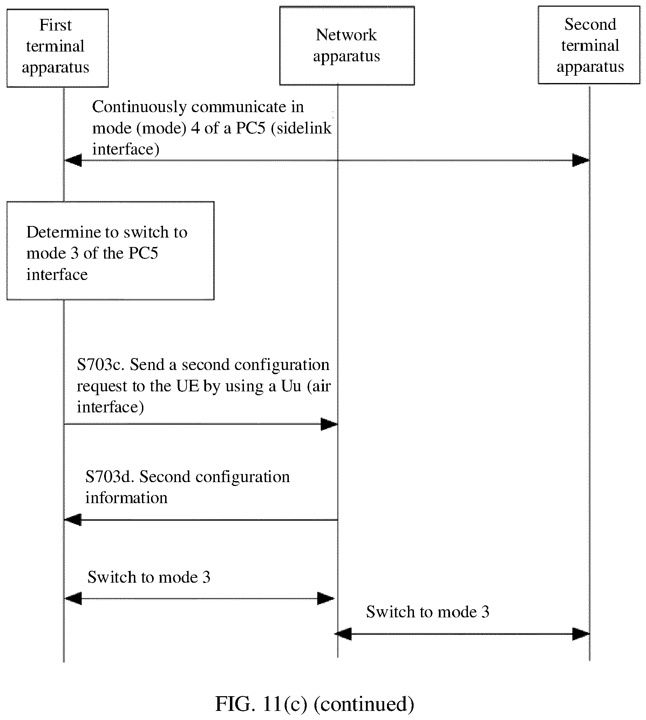

In an example, the first terminal apparatus is currently continuously communicating by using mode 4 of the PC5 interface, and determines, by using the parameters for mode 4 and the parameters for mode 3 (and optionally, the scenario information), to switch to mode 3 for communication, mode 3 needs to be configured. Specifically, referring to FIG. 11(c), a specific implementation of configuring mode 3 to be switched to is similar to FIG. 11(b), that is, the configuration process also includes S703c and S703d.

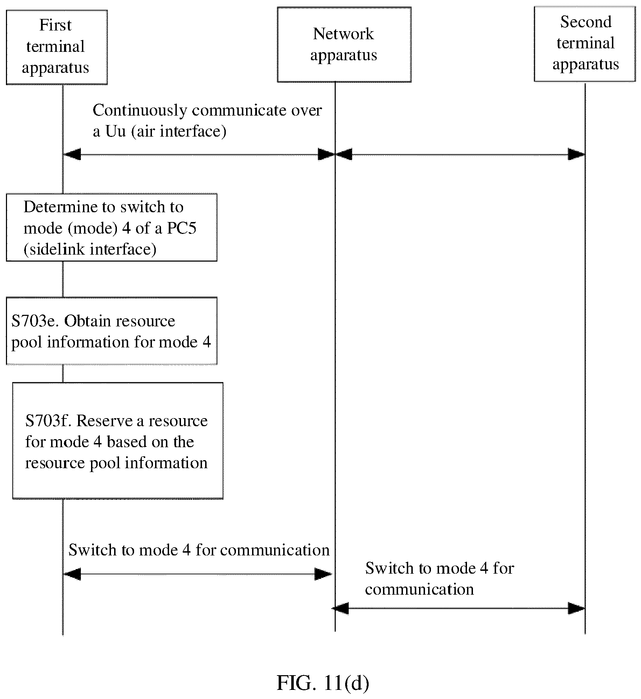

In an example, if the first terminal apparatus is currently continuously communicating by using the Uu interface, and the first terminal apparatus determines, by using the parameter of the Uu interface and the parameters for mode 4, to switch to mode 4 for communication, mode 4 needs to be configured. Specifically, referring to FIG. 11(d), the configuration of mode 4 to be switched to may be implemented as follows: S703e. The first terminal apparatus obtains resource pool information for mode 4; and S703f. The first terminal apparatus reserves a resource for mode 4 based on the resource pool information.

The resource pool may be a resource pool preconfigured in the first terminal apparatus, or may be configured by the network apparatus for the first terminal apparatus. It is easy to understand that if the first terminal apparatus may currently be connected to the network, that is, may be connected to the network apparatus by using the Uu interface, the first terminal apparatus may re-obtain the resource pool information from the network apparatus. Alternatively, the network apparatus obtains the resource pool information preconfigured internally. A manner of obtaining the resource pool information is not limited in this embodiment of this application. After obtaining the resource pool information, the first terminal apparatus may reserve a corresponding resource in the resource pool for use in subsequent communication.

It is easy to understand that because the terminal may actively select a resource when operating in mode 4, in FIG. 11(d), the first terminal apparatus only needs to perform sensing to obtain the resource pool information when performing uplink/downlink communication by using the PC5 interface. After obtaining the resource pool information, the terminal may switch to mode 4 and send information on an idle time-frequency resource.

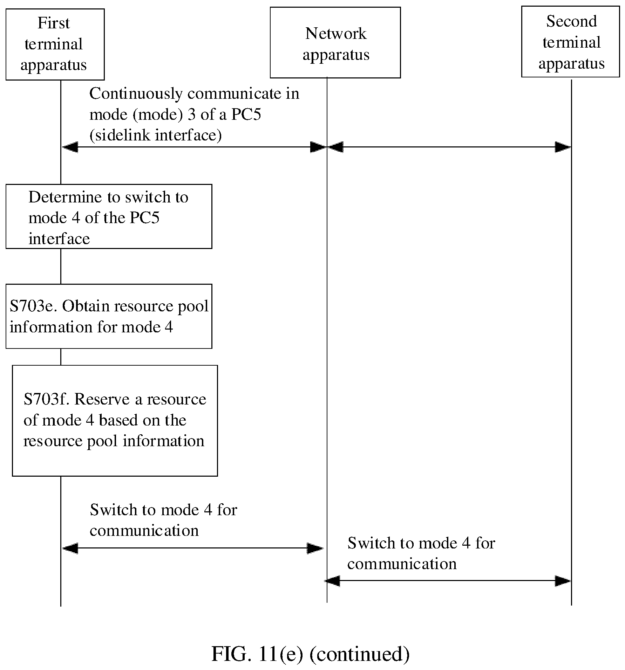

In an example, if the first terminal apparatus is currently continuously communicating by using mode 3 of the PC5 interface, and the first terminal apparatus determines, by using the parameters for mode 3 and the parameters for mode 4, to switch to mode 4 for communication, mode 4 needs to be configured. Specifically, referring to FIG. 11(e), a process in which mode 4 to be switched to is configured herein is similar to that in FIG. 11(d), and includes S703e and S703f.

In this embodiment of this application, determining whether to perform interface or mode switching and configuration of a new interface or mode after switching is determined are all completed in advance. In this way, data can be transferred to a new port or mode without service interruption.

S704. After the configuration is completed, the first terminal apparatus switches from the first mode of the PC5 interface to the Uu interface for communication, or switches from the first mode of the PC5 interface to a second mode of the PC5 interface for communication, or switches from the Uu interface to the first mode of the PC5 interface for communication, or switches from the Uu interface to the second mode of the PC5 interface for communication.

After obtaining the configuration information (including resource configuration), the first terminal apparatus may establish communication over the new interface, disconnect communication over the original interface, and switch data from the original interface to the new interface for transmission.

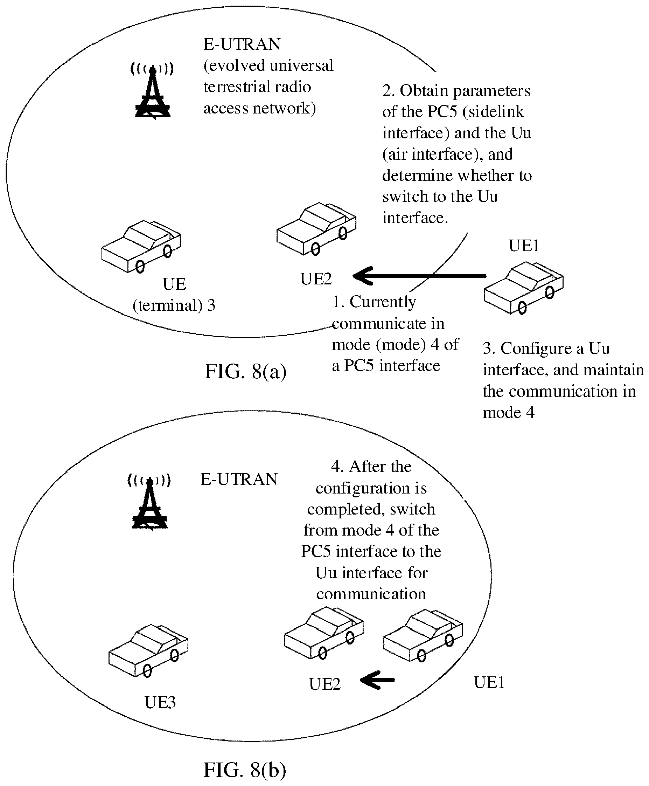

For example, referring to FIG. 11(a), after obtaining the first configuration information (including resource configuration), the first terminal apparatus completes resource configuration, and learns which resources need to be used to perform communication over the Uu interface. In this way, the first terminal apparatus may switch to the Uu for communication. The process shown in FIG. 11(a) may further be represented by using FIG. 8(a) and FIG. 8(b).

For another example, referring to FIG. 11(e), after reserving the resource for mode 4, the first terminal apparatus completes resource configuration, and learns which resources need to be used to perform communication in mode 4. In this way, the first terminal apparatus may switch to mode 4 for communication.

According to the communication method provided in this embodiment of this application, the first terminal apparatus performs interface switching or mode switching only after an interface or mode to be switched to is configured. In this way, it can be ensured that during a configuration period, the terminal apparatus can continue to communicate by using an original interface. After the configuration is completed, the terminal apparatus can switch to a newly switched-to interface or mode for communication. A switching delay can be ensured to meet a service delay requirement, ensure service continuity of the terminal apparatus, and implement seamless switching between new and old interfaces or between new and old modes.

Further, in the technical solution in this embodiment of this application, the network end configuration does not need to be modified. When determining that the current interface or mode cannot meet the service requirement, the terminal may trigger the interface or mode switching. This simplifies implementation of the network end.

In the foregoing method embodiments, the network apparatus and the terminal apparatus are used as an example for description. It may be understood that, in the foregoing method embodiments, the method and function implemented by the network device may also be implemented by using a chip that may be used in the network device, and the method and function implemented by the terminal may also be implemented by using a chip that may be used in the terminal.

The solutions provided in the embodiments of this application are mainly described from the perspective of interaction between different network elements. It may be understood that, to implement the foregoing functions, the network device and the terminal device include corresponding hardware structures and/or software modules for performing the functions. With reference to the units and algorithm steps described in the embodiments disclosed in this application, embodiments of this application can be implemented in a form of hardware or hardware and computer software. Whether a function is performed by hardware or hardware driven by computer software depends on particular applications and design constraints of the technical solutions. A person skilled in the art may use different methods to implement the described functions for each particular application, but it should not be considered that the implementation falls beyond the scope of the technical solutions in the embodiments of this application.

In the embodiments of this application, the network device and the terminal may be divided into function units based on the foregoing method examples. For example, each function unit may be obtained through division based on a corresponding function, or two or more functions may be integrated into one processing unit. The integrated unit may be implemented in a form of hardware, or may be implemented in a form of a software function unit. It should be noted that the unit division in this embodiment of this application is an example and is merely logical function division, and there may be another division manner during actual implementation.

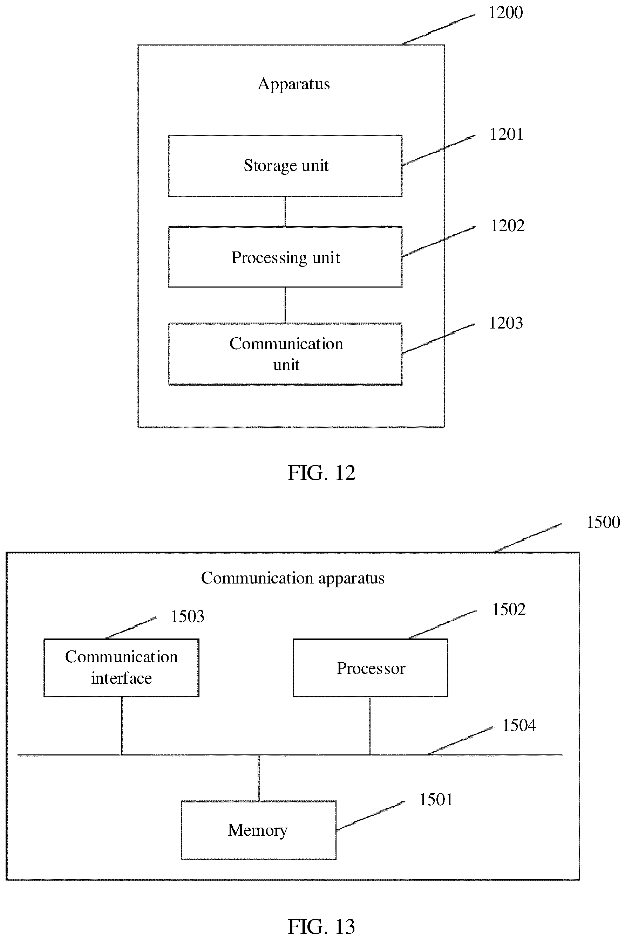

FIG. 12 is a schematic block diagram of a communication apparatus according to an embodiment of this application. The apparatus 1200 may exist in a form of software, or may be hardware, for example, may be a chip that may be used in a hardware device. The apparatus 1200 includes a processing unit 1202 and a communication unit 1203.

The processing unit 1202 may be configured to support the apparatus 1200 in performing S702, S703, and S704 shown in FIG. 7, S903a shown in FIG. 9(a), and/or other processes used in the solutions described in this specification. The communication unit 1203 is configured to support communication between the apparatus 1200 and another network element (for example, a network device), for example, perform S901a and S902a shown in FIG. 9(a), S1003 and S1001 shown in FIG. 10(a), and/or other steps of the solutions described in this specification.

Optionally, the apparatus 1200 may further include a storage unit 1201, configured to store program code and data of the apparatus 1200, where the data may include but is not limited to original data or intermediate data.
In a possible implementation, the processing unit 1202 may be a processor or a controller, for example, may be a central processing unit (Central Processing Unit, CPU), a general-purpose processor, a digital signal processing (Digital Signal Processing, DSP), an application specific integrated circuit (Application Specific Integrated Circuit, ASIC), a field programmable gate array (Field-Programmable Gate Array, FPGA) or another programmable logic device, a transistor logic device, a hardware component, or any combination thereof. The processing module may implement or execute various exemplary logical blocks, modules, and circuits described with reference to the disclosure of this application. The processor may also be a combination for implementing computing functions, for example, a combination of one or more microprocessors, a combination of a DSP and a microprocessor. The communication unit 1203 may be a transceiver, a transceiver circuit, a communication interface, or the like. The storage unit 1201 may be a memory.

In a possible implementation, when the processing unit 1202 is a processor, the communication unit 1203 is a communication interface, and the storage unit 1201 is a memory, a structure of the communication apparatus in this embodiment of this application may be shown in FIG. 13.

FIG. 13 is a simplified schematic diagram of a possible design structure of a communication apparatus according to an embodiment of this application. The communication apparatus 1500 includes a processor 1502, a communication interface 1503, and a memory 1501. Optionally, the communication apparatus 1500 may further include a bus 1504. The communication interface 1503, the processor 1502, and the memory 1501 may be connected to each other by using the bus 1504. The bus 1504 may be a Peripheral Component Interconnect (Peripheral Component Interconnect, PCI for short) bus, an Extended Industry Standard Architecture (Extended Industry Standard Architecture, EISA for short) bus, or the like. The bus 1504 may be classified into an address bus, a data bus, a control bus, and the like. For ease of illustration, only one thick line is used to represent the bus in FIG. 13, but this does not mean that there is only one bus or only one type of bus.

A person of ordinary skill in the art may understand that all or some of the foregoing embodiments may be implemented by software, hardware, firmware, or a combination thereof. When software is used to implement the embodiments, the embodiments may be implemented completely or partially in a form of a computer program product. The computer program product includes one or more computer instructions. When the computer program instructions are loaded and executed on the computer, the procedure or functions according to the embodiments of this application are completely or partially generated. The computer may be a general-purpose computer, a special-purpose computer, a computer network, or another programmable apparatus. The computer instructions may be stored in a computer readable storage medium or may be transmitted from a computer readable storage medium to another computer readable storage medium. For example, the computer instructions may be transmitted from a website, computer, server, or data center to another website, computer, server, or data center in a wired (for example, a coaxial cable, an optical fiber, or a digital subscriber line (Digital Subscriber Line, DSL)) or wireless (for example, infrared, radio, or microwave) manner. The storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a digital video disc (Digital Video Disc, DVD)), a semiconductor medium (for example, a solid state disk (SSD)), or the like.

In the several embodiments provided in this application, it should be understood that the disclosed system, apparatus, and method may be implemented in other manners. For example, the described apparatus embodiment is merely an example. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic or other forms.

The units described as separate parts may or may not be physically separate, and parts displayed as units may or may not be physical units, may be located in one position, or may be distributed on a plurality of network devices (for example, terminals). Some or all of the units may be selected according to actual needs to achieve the purpose of the solutions in the embodiments.

In addition, function units in the embodiments of this application may be integrated into one processing unit, or each of the function units may exist alone physically, or two or more units are integrated into one unit. The integrated unit may be implemented in a form of hardware, or may be implemented in a form of hardware and a software function unit.

According to the foregoing descriptions of the implementations, a person skilled in the art may clearly understand that this application may be implemented by software in addition to necessary universal hardware, and certainly may also be implemented by hardware. However, in many cases, the former is a better implementation. Based on such an understanding, the technical solutions of this application essentially, or the part contributing to the existing technology may be implemented in the form of a software product. The software product is stored in an accessible storage medium such as a floppy disk of a computer, a hard disk, or a compact disc, and includes several instructions for instructing a computer device (which may be a personal computer, a server, or a network device) to perform the methods described in the embodiments of this application.

The foregoing descriptions are merely specific implementations of this application, but are not intended to limit the protection scope of this application. Any variation or replacement made within the technical scope disclosed in this application shall fall within the protection scope of this application. Therefore, the protection scope of this application shall be subject to the protection scope of the claims.

## Claims

1. A communication method, comprising:
continuously communicating (S701) in a first mode of a PC5 interface or through a Uu interface;
determining (S702) to perform interface switching or mode switching;
configuring (S703) an interface or mode to be switched to;
after the configuration is completed, switching (S704) from the first mode of the PC5 interface to the Uu interface for communication, or switching from the first mode of the PC5 interface to a second mode of the PC5 interface for communication, or switching from the Uu interface to the first mode of the PC5 interface for communication, or switching from the Uu interface to the second mode of the PC5 interface for communication, wherein the determining to perform interface switching comprises:
when unicast communication is performed and a Uu interface is available, a resource usage of a PC5 interface is higher than a first threshold, and/or link quality of the PC5 interface is lower than link quality of the Uu interface, and/or scenario information is applicable to communication over the Uu interface, determining to switch from the PC5 interface to the Uu interface;
when unicast communication is performed and a Uu interface is available, the resource usage of the PC5 interface is lower than the first threshold, and/or the link quality of the PC5 interface is higher than the link quality of the Uu interface, and/or the scenario information is applicable to communication over the PC5 interface, determining to switch from the Uu interface to a first mode or a second mode of the PC5 interface;
when unicast communication is performed and a Uu interface is available, the resource usage for the first mode is lower than a fifth threshold, and/or the link quality of the Uu interface is lower than a sixth threshold, and/or the scenario information is applicable to communication in the first mode, determining to switch from the Uu interface to the first mode of the PC5 interface;
when unicast communication is performed and a Uu interface is available, the resource usage for the second mode is lower than a seventh threshold, and/or the link quality of the Uu interface is lower than the sixth threshold, and/or the scenario information is applicable to communication in the second mode, determining to switch from the Uu interface to the second mode of the PC5 interface;
when broadcast communication is performed and a Uu interface is available, the resource usage of the PC5 interface is higher than the first threshold, determining to switch from the PC5 interface to the Uu interface; and/or if the scenario information is applicable to communication over the Uu interface, determining to switch from the PC5 interface to the Uu interface; and
when broadcast communication is performed and a terminal apparatus cannot receive downlink information of a network apparatus, determining to switch from the Uu interface to the first mode or the second mode of the PC5 interface; and/or if the resource usage for the second mode is lower than the seventh threshold, and/or the scenario information is applicable to communication in the second mode, determining to switch from the Uu interface to the second mode of the PC5 interface; and/or if the resource usage for the first mode is lower than the fifth threshold, and/or the scenario information is applicable to communication in the first mode, determining to switch from the Uu interface to the first mode of the PC5 interface.

2. The communication method according to claim 1, wherein the determining to perform interface switching or mode switching is performed based on one or more of the following parameters: a resource usage for the first mode, a resource usage for the second mode, link quality of the Uu interface, availability of the Uu interface, a resource usage of the PC5 interface, link quality of the PC5 interface, and scenario information, the scenario information comprises location information, service transmission delay information, and terminal apparatus density information.

3. The communication method according to any one of claims 1 to 2, wherein the determining to perform mode switching comprises:
when a resource pool for a first mode and a resource pool for a second mode are mutually independent, a resource usage for the first mode is higher than a first threshold, and a resource usage for the second mode is lower than the first threshold, determining to switch from the first mode to the second mode; or the resource usage for the first mode is higher than the resource usage for the second mode, determining to switch from the first mode to the second mode; or ,
when the resource pool for the first mode and the resource pool for the second mode are shared, a service transmission delay is lower than a third threshold, determining to switch from the second mode to the first mode; or , a terminal apparatus density is higher than a fourth threshold, determining to switch from the first mode to the second mode; wherein
the first mode is mode 4, and the second mode is mode 3.

4. The communication method according to any one of claims 1 to 3, wherein configuring a Uu interface to be switched to comprises:
sending a first configuration request to a network apparatus through the Uu interface, wherein the first configuration request is used to request first configuration information for the Uu interface; and
receiving the first configuration information from the network apparatus through the Uu interface.

5. The communication method according to any one of claims 1 to 3, wherein the first mode is mode 4; and
configuring mode 3 to be switched to comprises:
sending a second configuration request to the network apparatus through the Uu interface, wherein the second configuration request is used to request second configuration information for mode 3 of the PC5 interface; and
receiving the second configuration information from the network apparatus through the Uu interface.

6. The communication method according to any one of claims 1 to 3, wherein the first mode is mode 3; and
configuring mode 4 to be switched to comprises:
obtaining resource pool information for mode 4; and
reserving a resource for mode 4 based on the resource pool information.

7. The communication method according to any one of claims 1 to 6, wherein obtaining link quality of a Uu interface comprises:
sending a first parameter obtaining request to a network apparatus, so as to request the network apparatus to send a first reference signal through the Uu interface;
receiving the first reference signal from the network apparatus through the Uu interface;
measuring the link quality of the Uu interface based on the first reference signal.

8. The communication method according to any one of claims 1 to 6, wherein obtaining link quality of a PC5 interface comprises:
sending a second parameter obtaining request to a road side unit, RSU having a PC5 interface through a PC5 interface, so as to request the RSU having the PC5 interface to send a second reference signal through the PC5 interface;
receiving the second reference signal from the RSU having the PC5 interface through the PC5 interface;
measuring the link quality of the PC5 interface based on the second reference signal;
obtaining a resource usage of the PC5 interface comprises:
measuring a channel busy rate , CBR through the PC5 interface, wherein CBR is used as the resource usage of the PC5 interface.

9. The communication method according to any one of claims 1 to 6, wherein obtaining parameters for a second mode comprises:
sending a third parameter obtaining request to an RSU operating in the second mode;
receiving the parameters for the second mode from the RSU.

10. The communication method according to any one of claims 1 to 6, wherein obtaining parameters for a second mode comprises:
switching to a frequency band for the second mode; and
measuring parameters for the second mode on a frequency band for the second mode.

11. A communication apparatus, comprising:
a processor, configured to implement the communication method according to any one of claims 1 to 10.

12. A computer readable storage medium, comprising a program or an instruction, wherein when the program or the instruction is executed, the communication method according to any one of claims 1 to 10 is implemented.

## Patentansprüche

1. Kommunikationsverfahren, umfassend:
kontinuierliches Kommunizieren (S701) in einem ersten Modus einer PC5-Schnittstelle oder durch eine Uu-Schnittstelle:
Bestimmen (S702), ein Umschalten einer Schnittstelle oder ein Umschalten eines Modus durchzuführen;
Konfigurieren (S703) einer Schnittstelle oder eines Modus, zu der/dem umgeschaltet werden soll;
nachdem die Konfiguration abgeschlossen ist, Umschalten (S704) von dem ersten Modus der PC5-Schnittstelle zu der Uu-Schnittstelle für eine Kommunikation oder Umschalten von dem ersten Modus der PC5-Schnittstelle zu einem zweiten Modus der PC5-Schnittstelle für die Kommunikation oder Umschalten von der Uu-Schnittstelle zu dem ersten Modus der PC5-Schnittstelle für die Kommunikation oder Umschalten von der Uu-Schnittstelle zu dem zweiten Modus der PC5-Schnittstelle für die Kommunikation, wobei das Bestimmen, das Umschalten der Schnittelle durchzuführen, umfasst:
wenn eine Unicast-Kommunikation durchgeführt wird und eine Uu-Schnittstelle verfügbar ist, eine Ressourcennutzung einer PC5-Schnittstelle höher als ein erster Schwellenwert ist und/oder eine Verbindungsqualität der PC5-Schnittstelle niedriger als die Verbindungsqualität der Uu-Schnittstelle ist, und/oder Szenarioinformationen auf die Kommunikation über die Uu-Schnittstelle anwendbar sind, Bestimmen, von der PC5-Schnittstelle zu der Uu-Schnittstelle umzuschalten;
wenn die Unicast-Kommunikation durchgeführt wird und eine Uu-Schnittstelle verfügbar ist, die Ressourcennutzung der PC5-Schnittstelle niedriger als der erste Schwellenwert ist, und/oder die Verbindungsqualität der PC5-Schnittstelle höher als die Verbindungsqualität der Uu-Schnittstelle ist, und/oder die Szenarioinformationen auf die Kommunikation über die PC5-Schnittstelle anwendbar sind, Bestimmen, von der Uu-Schnittstelle zu einem ersten Modus oder einem zweiten Modus der PC5-Schnittstelle umzuschalten;
wenn die Unicast-Kommunikation durchgeführt wird und eine Uu-Schnittstelle verfügbar ist, die Ressourcennutzung für den ersten Modus niedriger als ein fünfter Schwellenwert ist und/oder die Verbindungsqualität der Uu-Schnittstelle niedriger als ein sechster Schwellenwert ist, und/oder die Szenarioinformationen auf die Kommunikation in dem ersten Modus anwendbar sind, Bestimmen, von der Uu-Schnittstelle zu dem ersten Modus der PC5-Schnittstelle umzuschalten;
wenn die Unicast-Kommunikation durchgeführt wird und eine Uu-Schnittstelle verfügbar ist, die Ressourcennutzung für den zweiten Modus niedriger als ein siebter Schwellenwert ist, und/oder die Verbindungsqualität der Uu-Schnittstelle niedriger als der sechste Schwellenwert ist, und/oder die Szenarioinformationen auf die Kommunikation in dem zweiten Modus anwendbar sind, Bestimmen, von der Uu-Schnittstelle zu dem zweiten Modus der PC5-Schnittstelle umzuschalten;
wenn eine Broadcast-Kommunikation durchgeführt wird und eine Uu-Schnittstelle verfügbar ist, die Ressourcennutzung der PC5-Schnittstelle höher als der erste Schwellenwert ist, Bestimmen, von der PC5-Schnittstelle zu der Uu-Schnittstelle umzuschalten; und/oder falls die Szenarioinformationen auf die Kommunikation über die Uu-Schnittstelle anwendbar sind, Bestimmen, von der PC5-Schnittstelle zu der Uu-Schnittstelle umzuschalten; und
wenn die Broadcast-Kommunikation durchgeführt wird und eine Endgeräteeinrichtung keine Downlink-Informationen einer Netzwerkeinrichtung empfangen kann, Bestimmen, von der Uu-Schnittstelle zu dem ersten Modus oder dem zweiten Modus der PC5-Schnittstelle umzuschalten; und/oder falls die Ressourcennutzung für den zweiten Modus niedriger als der siebte Schwellenwert ist und/oder die Szenarioinformationen auf die Kommunikation in dem zweiten Modus anwendbar sind, Bestimmen, von der Uu-Schnittstelle zu dem zweiten Modus der PC5-Schnittstelle umzuschalten; und/oder falls die Ressourcennutzung für den ersten Modus niedriger als der fünfte Schwellenwert ist, und/oder die Szenarioinformationen auf die Kommunikation in dem ersten Modus anwendbar sind, Bestimmen, von der Uu-Schnittstelle zu dem ersten Modus der PC5-Schnittstelle umzuschalten.

2. Kommunikationsverfahren nach Anspruch 1, wobei das Bestimmen, das Umschalten der Schnittstelle oder das Umschalten des Modus durchzuführen, basierend auf einem oder mehreren der folgenden Parameter durchgeführt wird: einer Ressourcennutzung für den ersten Modus, einer Ressourcennutzung für den zweiten Modus, einer Verbindungsqualität der Uu-Schnittstelle, einer Verfügbarkeit der Uu-Schnittstelle, einer Ressourcennutzung der PC5-Schnittstelle, einer Verbindungsqualität der PC5-Schnittstelle und Szenarioinformationen, wobei die Szenarioinformationen Standortinformationen, Dienstübertragungsverzögerungsinformationen und Endgeräteinrichtungsdichteinformationen umfassen.

3. Kommunikationsverfahren nach einem der Ansprüche 1 bis 2, wobei das Bestimmen, das Umschalten des Modus durchzuführen, umfasst:
wenn ein Ressourcenpool für einen ersten Modus und ein Ressourcenpool für einen zweiten Modus unabhängig voneinander sind, eine Ressourcennutzung für den ersten Modus höher als ein erster Schwellenwert ist, und eine Ressourcennutzung für den zweiten Modus niedriger als der erste Schwellenwert ist, Bestimmen, von dem ersten Modus zu dem zweiten Modus umzuschalten; oder die Ressourcennutzung für den ersten Modus höher als die Ressourcennutzung für den zweiten Modus ist, Bestimmen, von dem ersten Modus zu dem zweiten Modus umzuschalten; oder,
wenn der Ressourcenpool für den ersten Modus und der Ressourcenpool für den zweiten Modus gemeinsam genutzt werden, eine Dienstübertragungsverzögerung niedriger als ein dritter Schwellenwert ist, Bestimmen, von dem zweiten Modus zu dem ersten Modus umzuschalten; oder eine Endgeräteinrichtungsdichte höher als ein vierter Schwellenwert ist, Bestimmen, von dem ersten Modus zu dem zweiten Modus umzuschalten; wobei
der erste Modus 4 ist und der zweite Modus 3 ist.

4. Kommunikationsverfahren nach einem der Ansprüche 1 bis 3, wobei das Konfigurieren einer Uu-Schnittstelle, zu der umgeschaltet werden soll, umfasst:
Senden einer ersten Konfigurationsanforderung an eine Netzwerkeinrichtung durch die Uu-Schnittstelle, wobei die erste Konfigurationsanforderung verwendet wird, um erste Konfigurationsinformationen für die Uu-Schnittstelle anzufordern; und
Empfangen der ersten Konfigurationsinformationen von der Netzwerkeinrichtung durch die Uu-Schnittstelle.

5. Kommunikationsverfahren nach einem der Ansprüche 1 bis 3, wobei der erste Modus Modus 4 ist; und
Konfigurierungsmodus 3, zu dem umgeschaltet werden soll, umfasst:
Senden einer zweiten Konfigurationsanforderung an die Netzwerkeinrichtung durch die Uu-Schnittstelle, wobei die zweite Konfigurationsanforderung verwendet wird, um zweite Konfigurationsinformationen für Modus 3 der PC5-Schnittstelle anzufordern; und
Empfangen der zweiten Konfigurationsinformationen von der Netzwerkeinrichtung durch die Uu-Schnittstelle.

6. Kommunikationsverfahren nach einem der Ansprüche 1 bis 3, wobei der erste Modus Modus 3 ist; und
Konfigurierungsmodus 4, zu dem umgeschaltet werden soll, umfasst:
Erhalten von Ressourcenpoolinformationen für Modus 4; und
Reservieren einer Ressource für Modus 4 basierend auf den Ressourcenpool informationen.

7. Kommunikationsverfahren nach einem der Ansprüche 1 bis 6, wobei das Erhalten von Verbindungsqualität einer Uu-Schnittstelle umfasst:
Senden einer ersten Parametererhaltungsanforderung an eine Netzwerkeinrichtung, um die Netzwerkeinrichtung anzufordern, ein erstes Referenzsignal durch die Uu-Schnittstelle zu senden;
Empfangen des ersten Referenzsignals von der Netzwerkeinrichtung durch die Uu-Schnittstelle;
Messen der Verbindungsqualität der Uu-Schnittstelle basierend auf dem ersten Referenzsignal.

8. Kommunikationsverfahren nach einem der Ansprüche 1 bis 6, wobei das Erhalten von Verbindungsqualität einer PC5-Schnittstelle umfasst:
Senden einer zweiten Parametererhaltungsanforderung an eine Straßenseiteneinheit, RSU, die eine PC5-Schnittstelle durch eine PC5-Schnittstelle aufweist, um die RSU, die die PC5-Schnittstelle aufweist, anzufordern, ein zweites Referenzsignal durch die PC5-Schnittstelle zu senden;
Empfangen des zweiten Referenzsignals von der RSU, die die PC5-Schnittstelle aufweist, durch die PC5-Schnittstelle;
Messen der Verbindungsqualität der PC5-Schnittstelle basierend auf dem zweiten Referenzsignal;
Erhalten einer Ressourcennutzung der PC5-Schnittstelle umfasst:
Messen einer Kanalbesetzungsrate, CBR, durch die PC5-Schnittstelle, wobei die CBR als die Ressourcennutzung der PC5-Schnittstelle verwendet wird.

9. Kommunikationsverfahren nach einem der Ansprüche 1 bis 6, wobei das Erhalten von Parametern für einen zweiten Modus umfasst:
Senden eines dritten Parametererhaltungsanforderung an eine RSU, die in dem zweiten Modus betrieben wird;
Empfangen der Parameter für den zweiten Modus aus der RSU.

10. Kommunikationsverfahren nach einem der Ansprüche 1 bis 6, wobei das Erhalten von Parametern für einen zweiten Modus umfasst:
Umschalten zu einem Frequenzband für den zweiten Modus; und
Messen von Parametern für den zweiten Modus auf einem Frequenzband für den zweiten Modus.

11. Kommunikationseinrichtung, umfassend:
einen Prozessor, der konfiguriert ist, um das Kommunikationsverfahren nach einem der Ansprüche 1 bis 10 zu implementieren.

12. Computerlesbares Speicherungsmedium, umfassend ein Programm oder eine Anweisung, wobei, wenn das Programm oder die Anweisung ausgeführt wird, das Kommunikationsverfahren nach einem der Ansprüche 1 bis 10 implementiert wird.

## Revendications

1. Procédé de communication, comprenant :
le fait de communiquer (S701) de façon continue dans un premier mode d'une interface PC5 ou par l'intermédiaire d'une interface Uu :
le fait de déterminer (S702) de mettre en oeuvre une commutation d'interface ou une commutation de mode ;
la configuration (S703) d'une interface ou d'un mode vers lequel commuter ;
après que la configuration est achevée, la commutation (S704) depuis le premier mode de l'interface PC5 vers l'interface Uu pour la communication, ou la commutation depuis le premier mode de l'interface PC5 vers un second mode de l'interface PC5 pour la communication, ou la commutation depuis l'interface Uu vers le premier mode de l'interface PC5 pour la communication, ou la commutation depuis l'interface Uu vers le second mode de l'interface PC5 pour la communication, dans lequel la détermination de mettre en oeuvre une commutation d'interface comprend :
lorsqu'une communication en monodiffusion est mise en oeuvre et qu'une interface Uu est disponible, qu'une utilisation de ressources d'une interface PC5 est supérieure à un premier seuil, et/ou qu'une qualité de liaison de l'interface PC5 est inférieure à une qualité de liaison de l'interface Uu, et/ou que des informations de scénario sont applicable pour une communication sur l'interface Uu, la détermination de commuter de l'interface PC5 vers l'interface Uu ;
lorsqu'une communication en monodiffusion est mise en oeuvre et qu'une interface Uu est disponible, que l'utilisation de ressources de l'interface PC5 est inférieure au premier seuil, et/ou que la qualité de liaison de l'interface PC5 est supérieure à la qualité de liaison de l'interface Uu, et/ou que les informations de scénario sont applicables à une communication sur l'interface PC5, la détermination de commuter de l'interface Uu vers un premier mode ou un second mode de l'interface PC5 ;
lorsqu'une communication en monodiffusion est mise en oeuvre et qu'une interface Uu est disponible, que l'utilisation de ressources pour le premier mode est inférieure à un cinquième seuil, et/ou que la qualité de liaison de l'interface Uu est inférieure à un sixième seuil, et/ou que les informations de scénario sont applicables à une communication dans le premier mode, la détermination de commuter de l'interface Uu vers le premier mode de l'interface PC5 ;
lorsqu'une communication en monodiffusion est mise en oeuvre et qu'une interface Uu est disponible, que l'utilisation de ressources pour le second mode est inférieure à un septième seuil, et/ou que la qualité de liaison de l'interface Uu est inférieure au sixième seuil, et/ou que les informations de scénario sont applicables à une communication dans le second mode, la détermination de commuter de l'interface Uu vers le second mode de l'interface PC5 ;
lorsqu'une communication en diffusion est mise en oeuvre et qu'une interface Uu est disponible, que l'utilisation de ressources de l'interface PC5 est supérieure au premier seuil, la détermination de commuter de l'interface PC5 vers l'interface Uu ; et/ou si les informations de scénario sont applicables à une communication sur l'interface Uu, la détermination de commuter de l'interface PC5 vers l'interface Uu ; et
lorsqu'une communication en diffusion est mise en oeuvre et qu'un appareil terminal ne peut pas recevoir d'informations de liaison descendante d'un appareil de réseau, la détermination de commuter de l'interface Uu vers le premier mode ou le second mode de l'interface PC5 ; et/ou si l'utilisation de ressources pour le second mode est inférieure au septième seuil, et/ou que les informations de scénario sont applicables à une communication dans le second mode, la détermination de commuter de l'interface Uu vers le second mode de l'interface PC5 ; et/ou si l'utilisation de ressources pour le premier mode est inférieure au cinquième seuil, et/ou que les informations de scénario sont applicables à une communication dans le premier mode, la détermination de commuter de l'interface Uu vers le premier mode de l'interface PC5.

2. Procédé de communication selon la revendication 1, dans lequel la détermination de mettre en oeuvre une commutation d'interface ou une commutation de mode est mise en oeuvre en fonction d'un ou plusieurs des paramètres suivants : une utilisation de ressources pour le premier mode, une utilisation de ressources pour le second mode, une qualité de liaison de l'interface Uu, une disponibilité de l'interface Uu, une utilisation de ressources de l'interface PC5, une qualité de liaison de l'interface PC5, et des informations de scénario, les informations de scénario comprennent des informations de localisation, des informations de retard de transmission de service, et des informations de densité d'appareils terminaux.

3. Procédé de communication selon l'une quelconque des revendications 1 à 2, dans lequel la détermination de mettre en oeuvre une commutation de mode comprend :
lorsqu'une réserve de ressources pour un premier mode et une réserve de ressources pour un second mode sont mutuellement indépendantes, qu'une utilisation de ressources pour le premier mode est supérieure à un premier seuil, et qu'une utilisation de ressources pour le second mode est inférieure au premier seuil, la détermination de commuter du premier mode vers le second mode ; ou, lorsque l'utilisation de ressources pour le premier mode est supérieure à l'utilisation de ressources pour le second mode, la détermination de commuter du premier mode vers le second mode ; ou,
lorsque la réserve de ressources pour le premier mode et la réserve de ressources pour le second mode sont partagées, qu'un retard de transmission de service est inférieur à un troisième seuil, la détermination de commuter du second mode vers le premier mode ; ou, lorsqu'une densité d'appareils terminaux est supérieure à un quatrième seuil, la détermination de commuter du premier mode vers le second mode ; dans lequel
le premier mode est le mode 4, et le second mode est le mode 3.

4. Procédé de communication selon l'une quelconque des revendications 1 à 3, dans lequel la configuration d'une interface Uu vers laquelle commuter comprend :
l'envoi d'une première demande de configuration à un appareil de réseau par l'intermédiaire de l'interface Uu, dans lequel la première demande de configuration est utilisée pour demander des premières informations de configuration pour l'interface Uu ; et
la réception des premières informations de configuration en provenance de l'appareil de réseau par l'intermédiaire de l'interface Uu.

5. Procédé de communication selon l'une quelconque des revendications 1 à 3, dans lequel le premier mode est le mode 4 ; et
la configuration du mode 3 vers lequel commuter comprend :
l'envoi d'une seconde demande de configuration à l'appareil de réseau par l'intermédiaire de l'interface Uu, dans lequel la seconde demande de configuration est utilisée pour demander des secondes informations de configuration pour le mode 3 de l'interface PC5 ; et
la réception des secondes informations de configuration en provenance de l'appareil de réseau par l'intermédiaire de l'interface Uu.

6. Procédé de communication selon l'une quelconque des revendications 1 à 3, dans lequel le premier mode est le mode 3 ; et
la configuration du mode 4 vers lequel commuter comprend :
l'obtention d'informations de réserve de ressources pour le mode 4 ; et
la réservation d'une ressource pour le mode 4 en fonction des informations de réserve de ressources.

7. Procédé de communication selon l'une quelconque des revendications 1 à 6, dans lequel l'obtention d'une qualité de liaison d'une interface Uu comprend :
l'envoi d'une première demande d'obtention de paramètre à un appareil de réseau, de façon à demander à l'appareil de réseau d'envoyer un premier signal de référence par l'intermédiaire de l'interface Uu ;
la réception du premier signal de référence en provenance de l'appareil de réseau par l'intermédiaire de l'interface Uu ;
la mesure de la qualité de liaison de l'interface Uu en fonction du premier signal de référence.

8. Procédé de communication selon l'une quelconque des revendications 1 à 6, dans lequel l'obtention d'une qualité de liaison d'une interface PC5 comprend :
l'envoi d'une deuxième demande d'obtention de paramètre à une unité côté route, RSU ayant une interface PC5 par l'intermédiaire d'une interface PC5, de façon à demander à la RSU ayant l'interface PC5 d'envoyer un second signal de référence par l'intermédiaire de l'interface PC5 ;
la réception du second signal de référence en provenance de la RSU ayant l'interface PC5 par l'intermédiaire de l'interface PC5 ;
la mesure de la qualité de liaison de l'interface PC5 en fonction du second signal de référence ;
l'obtention d'une utilisation de ressources de l'interface PC5 comprend :
la mesure d'un taux d'occupation de canal, CBR par l'intermédiaire de l'interface PC5, dans lequel le CBR est utilisé en guise d'utilisation de ressources de l'interface PC5.

9. Procédé de communication selon l'une quelconque des revendications 1 à 6, dans lequel l'obtention de paramètres pour un second mode comprend :
l'envoi d'une troisième demande d'obtention de paramètre à une RSU fonctionnant dans le second mode ;
la réception des paramètres pour le second mode en provenance de la RSU.

10. Procédé de communication selon l'une quelconque des revendications 1 à 6, dans lequel l'obtention de paramètres pour un second mode comprend :
la commutation vers une bande de fréquence pour le second mode ; et
la mesure de paramètres pour le second mode sur une bande de fréquence pour le second mode.

11. Appareil de communication, comprenant :
un processeur, configuré pour implémenter le procédé de communication selon l'une quelconque des revendications 1 à 10.

12. Support de stockage lisible par ordinateur, comprenant un programme ou une instruction, dans lequel lorsque le programme ou l'instruction est exécuté, le procédé de communication selon l'une quelconque des revendications 1 à 10 est implémenté.
